# EUROPEAN PATENT APPLICATION

(11) **EP 4 340 478 A1**
(43) Date of publication of application: **20.03.2024**
(21) Application number: 21941829.0
(22) Date of filing: 10.05.2021
(51) Int. Cl.: H04W 72/02, H04W 92/18

(54) **TERMINAL AND COMMUNICATION METHOD**

(71) Applicant: NTT DOCOMO, INC., Tokyo 100-6150 (JP)
(72) Inventor: YOSHIOKA, Shohei, Tokyo 100-6150 (JP); SHIBAIKE, Naoya, Tokyo 100-6150 (JP); NAGATA, Satoshi, Tokyo 100-6150 (JP)
(74) Representative: Hoffmann Eitle
(86) International application number: PCT/JP2021/017783
(87) International publication number: WO 2022/239095

(57) **Abstract**

A terminal includes: a receiving unit configured to receive signals from a first terminal and a second terminal in a resource pool; a control unit configured to detect an overlap of a resource reserved based on a signal received from the first terminal and a resource reserved based on a signal received from the second terminal, and determine to which one of the first terminal and the second terminal information related to resources is transmitted; and a transmitting unit configured to transmit the information related to resources to the determined terminal.

## Description

### [FIELD OF THE INVENTION]

The present invention relates to a terminal and a communication method in a wireless communication system.

### [BACKGROUND OF THE INVENTION]

In LTE (Long-Term Evolution) and LTE's successor systems (for example, LTE-A (LTE-Advanced), NR (New Radio) (also referred to as "5G"), etc.), D2D (Device-to-Device) technology, in which terminals communicate directly with each other without going through a base station is under study (see, for example, non-patent document 1).

D2D reduces the traffic between terminals and base stations, and, for example, enables communication between terminals even if base stations become unable to communicate due to a disaster or the like. Note that the 3rd generation partnership project (3GPP) refers to D2D as "sidelink," but the more general term "D2D" will be used hereinafter. However, "sidelink" will be also used as necessary in the later description of the embodiment.

D2D communication is broadly classified into D2D discovery, which is for discovering other communicable terminals, and D2D communication, which is for allowing direct communication between terminals (also referred to as "D2D direct communication," "terminal-to-terminal direct communication," etc.). Hereinafter, when D2D communication, D2D discovery, and so forth are not particularly distinguished, they will be simply referred to as "D2D." Also, signals transmitted and received in D2D will be referred to as "D2D signals." Various use cases of services related to V2X (Vehicle-to-Everything) in NR are under study (see, for example, non-patent document 2).

### [Related-Art Documents]

### [Non-Patent Documents]

[Non-Patent Document 1] 3GPP TS 38.211 V16.5.0 (2021-03)
[Non-Patent Document 2] 3GPP TR 22.886 V15.1.0 (2017-03)

### [SUMMARY OF THE INVENTION]

### [TECHNICAL PROBLEM]

As an enhanced version of NR sidelink, eURLLC (enhanced Ultra Reliable Low Latency Communication) is under study. For example, in resource allocation mode 2, in which terminals select resources autonomously, a terminal 20A shares information that indicates a resource set with a terminal 20B, and the terminal 20B takes this information into account when selecting the resources for transmission, thereby improving the reliability of communication and reducing the delays.

On the other hand, when, in resource allocation mode 2, a transmitting terminal performs sensing, and, for example, there are other terminals outside the line of sight of the transmitting terminal, the quality of resources at a receiving terminal may differ significantly from the quality inferred based on the result of sensing by the transmitting terminal for the resources.

The present invention has been made in view of the foregoing, and aims to improve the reliability of communication during autonomous resource selection in terminal-to-terminal direct communication.

### [SOLUTION TO PROBLEM]

According to the technique disclosed herein, a terminal is provided. This terminal includes: a receiving unit configured to receive signals from a first terminal and a second terminal in a resource pool; a control unit configured to detect an overlap of a resource reserved based on a signal received from the first terminal and a resource reserved based on a signal received from the second terminal, and determine to which one of the first terminal and the second terminal information related to resources is transmitted; and a transmitting unit configured to transmit the information related to resources to the determined terminal.

### [ADVANTAGEOUS EFFECTS OF INVENTION]

According to the technique disclosed herein, the reliability of communication during autonomous resource selection can be improved in terminal-to-terminal direct communication.

### [BRIEF DESCRIPTION OF THE DRAWINGS]

[FIG. 1] FIG. 1 is a diagram for explaining V2X;
[FIG. 2] FIG. 2 is a diagram for explaining an example (1) of V2X transmission mode;
[FIG. 3] FIG. 3 is a diagram for explaining an example (2) of V2X transmission mode;
[FIG. 4] FIG. 4 is a diagram for explaining an example (3) of V2X transmission mode;
[FIG. 5] FIG. 5 is a diagram for explaining an example (4) of V2X transmission mode;
[FIG. 6] FIG. 6 is a diagram for explaining an example (5) of V2X transmission mode;
[FIG. 7] FIG. 7 is a diagram for explaining an example (1) of V2X communication type;
[FIG. 8] FIG. 8 is a diagram for explaining an example (2) of V2X communication type;
[FIG. 9] FIG. 9 is a diagram for explaining an example (3) of V2X communication type;
[FIG. 10] FIG. 10 is a sequence diagram that illustrates an example (1) of V2X operation;
[FIG. 11] FIG. 11 is a sequence diagram that illustrates an example (2) of V2X operation;
[FIG. 12] FIG. 12 is a sequence diagram that illustrates an example (3) of V2X operation;
[FIG. 13] FIG. 13 is a sequence diagram that illustrates an example (4) of V2X operation;
[FIG. 14] FIG. 14 is a diagram that illustrates an example of sensing operation;
[FIG. 15] FIG. 15 is a flowchart for explaining an example of preemption operation;
[FIG. 16] FIG. 16 is a diagram that illustrates an example of preemption operation;
[FIG. 17] FIG. 17 is a diagram that illustrates an example of partial sensing operation;
[FIG. 18] FIG. 18 is a diagram for explaining an example (1) situation of communication;
[FIG. 19] FIG. 19 is a diagram for explaining an example (2) situation of communication;
[FIG. 20] FIG. 20 is a diagram for explaining an example (3) situation of communication;
[FIG. 21] FIG. 21 is a diagram for explaining an example (4) situation of communication;
[FIG. 22] FIG. 22 is a diagram for explaining an example (5) situation of communication;
[FIG. 23] FIG. 23 is a sequence diagram for explaining an example of inter-UE coordination according to an embodiment of the present invention;
[FIG. 24] FIG. 24 is a diagram for explaining an example (1) of inter-UE coordination according to an embodiment of the present invention;
[FIG. 25] FIG. 25 is a diagram for explaining an example (2) of inter-UE coordination according to an embodiment of the present invention;
[FIG. 26] FIG. 26 is a diagram for explaining an example (3) of inter-UE coordination according to an embodiment of the present invention;
[FIG. 27] FIG. 27 is a diagram that illustrates an example (1) of resources that are used to transmit coordination information according to an embodiment of the present invention;
[FIG. 28] FIG. 28 is a diagram that illustrates an example (2) of resources that are used to transmit coordination information according to an embodiment of the present invention;
[FIG. 29] FIG. 29 is a diagram that illustrates an example functional structure of a base station 10 according to an embodiment of the present invention;
[FIG. 30] FIG. 30 is a diagram that illustrates an example functional structure of a terminal 20 according to an embodiment of the present invention; and
[FIG. 31] FIG. 31 is a diagram that illustrates an example hardware structure of a base station 10 or a terminal 20 according to an embodiment of the present invention.

### [DETAILED DESCRIPTION OF THE PREFERRED EMBODIMENTS]

An embodiment of the present invention will be described below with reference to the accompanying drawings. Note that the embodiment described below is only an example, and the embodiments to which the present invention can be applied are by no means limited to the following embodiment.

For the operation of the wireless communication system according to the embodiment of the present invention, existing technology is used as appropriate. This existing technology refers to, for example, existing LTE, but is by no means limited to existing LTE. Also, the term "LTE" used in this specification, unless otherwise specified, has a broad meaning including LTE-Advanced, subsequent schemes of LTE-Advanced (for example, NR), or wireless LAN (Local Area Network).

Also, in the following embodiment of the present invention, the duplex scheme may be the TDD (Time Division Duplex) scheme, the FDD (Frequency Division Duplex) scheme, or other schemes (for example, flexible duplex).

Also, in the following embodiment of the present invention, when wireless parameters and the like are "configured," this may mean that certain values are "pre-configured," or that wireless parameters are reported from a base station 10 or a terminal 20 and configured.

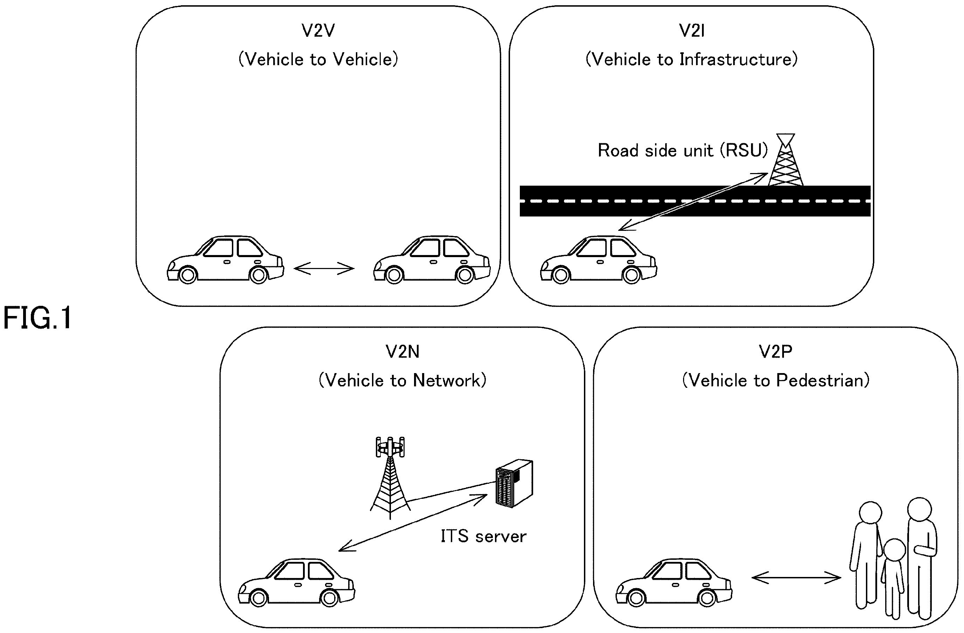

FIG. 1 is a diagram for explaining V2X. In 3GPP, envisaging the realization of V2X (Vehicle-to-Everything) or eV2X (enhanced V2X) by enhancing D2D functions, its standardization is in progress. As shown in FIG. 1, V2X is a part of ITS (Intelligent Transport Systems) and is a generic term for: V2V (Vehicle-to-Vehicle), which is a mode of communication between vehicles; V2I (Vehicle-to-Infrastructure), which is a mode of communication between a vehicle and a roadside unit (RSU) installed on the side of the road; V2N (Vehicle-to-Network), which is a mode of communication between a vehicle and an ITS server; and V2P (Vehicle-to-Pedestrian), which is a mode of communication between a vehicle and a mobile terminal that a pedestrian carries with him/her.

Also, in 3GPP, V2X to use LTE or NR cellular communication and terminal-to-terminal communication is under study. V2X to use cellular communication is also referred to as "cellular V2X." In NR V2X, studies are underway to realize large capacity, low delay, high reliability, and QoS (Quality of Service) control.

Regarding LTE or NR V2X, studies that are not bound to 3GPP specifications may begin in the future. For example, how to ensure interoperability, how to reduce the cost of implementation of higher layers, the method of using multiple RATs (Radio Access Technologies) together or switching between them, compliance with various countries' regulations, and the method of acquiring, distributing, database management, and use of LTE or NR V2X platform data may be discussed.

The following embodiment of the present invention mainly assumes a mode in which a communication device is mounted on a vehicle, but the embodiment of the present invention is by no means limited to this mode. For example, the communication device may be a terminal that a person carries with him/her, the communication device may be a device mounted on a drone or an aircraft, or the communication device may be a base station, an RSU, a relay station (relay node), a terminal with a scheduling capability, and so forth.

Note that SL (SideLink) may be distinguished based on one or a combination of UL (UpLink) or DL (DownLink) and following (1) to (4). Also, SL may have other names.
(1) Resource arrangement in the time domain;
(2) Resource arrangement in the frequency domain;
(3) Reference synchronization signal (including SLSS (Sidelink Synchronization Signal)); and
(4) Reference signal used to measure path loss for transmission power control.

Also, in SL or UL OFDM (Orthogonal Frequency Division Multiplexing), one of CP-OFDM (Cyclic-Prefix OFDM), DFT-S-OFDM (Discrete Fourier Transform-Spread-OFDM), OFDM without transform precoding, and OFDM with transform precoding may be applied.

In LTE SL, mode 3 and mode 4 are defined for allocation of SL resources to the terminal 20. In mode 3, transmitting resources are allocated dynamically by using DCI (Downlink Control Information) that is transmitted from the base station 10 to the terminal 20. Furthermore, in mode 3, SPS (Semi-Persistent Scheduling) is also possible. In mode 4, the terminal 20 autonomously selects transmitting resources from a resource pool.

Note that a "slot" as used in the following embodiment of the present invention may be read as a "symbol," "minislot," "subframe," "radio frame," "TTI (Transmission Time Interval)," and so forth. Also, a "cell" as used in the following embodiment of the present invention may be read as a "cell group," "carrier component," "BWP," "resource pool," "resource," "RAT (Radio Access Technology)," "system (including wireless LAN)," and so forth.

Note that, according to the following embodiment of the present invention, the terminal 20 is by no means limited to a V2X terminal, and may be any type of terminal that performs D2D communication. For example, the terminal 20 may be a terminal that a user carries with him/her such as a smartphone, or may be an IoT (Internet of Things) device such as a smart meter.

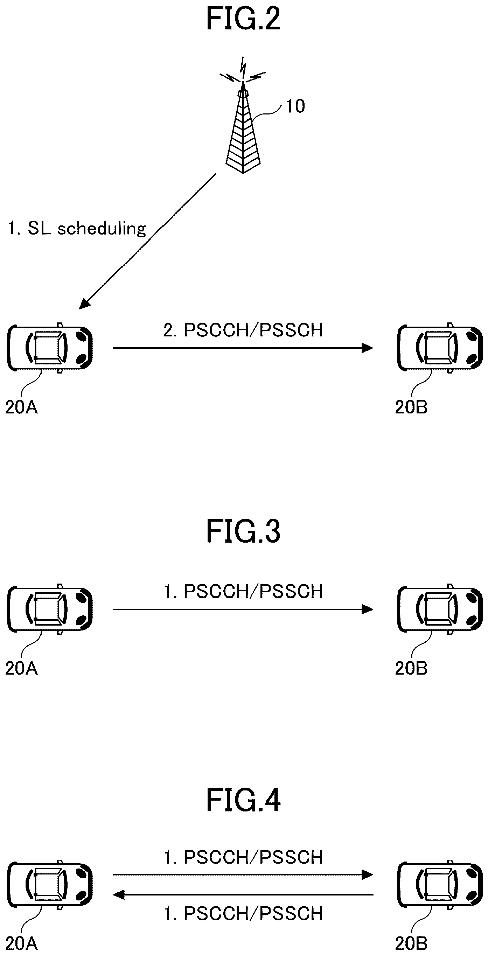

FIG. 2 is a diagram for explaining an example (1) of V2X transmission mode. In the transmission mode for sidelink communication shown in FIG. 2, in step 1, the base station 10 transmits sidelink scheduling to the terminal 20A. Next, the terminal 20A transmits PSCCH (Physical Sidelink Control CHannel) and PSSCH (Physical Sidelink Shared CHannel) to the terminal 20B based on the received scheduling (step 2). The transmission mode for sidelink communication shown in FIG. 2 may be referred to as "sidelink transmission mode 3 in LTE." In sidelink transmission mode 3 in LTE, Uu-based sidelink scheduling is performed. "Uu" refers to a radio interface between UTRAN (Universal Terrestrial Radio Access Network) and UE (User Equipment). Note that the transmission mode for sidelink communication shown in FIG. 2 may be referred to as "sidelink transmission mode 1 in NR."

FIG. 3 is a diagram for explaining an example (2) of V2X transmission mode. In the transmission mode for sidelink communication shown in FIG. 3, in step 1, the terminal 20A transmits PSCCH and PSSCH to the terminal 20B by using autonomously-selected resources. The transmission mode for sidelink communication shown in FIG. 3 may be referred to as "sidelink transmission mode 4 in LTE." In sidelink transmission mode 4 in LTE, the UE itself performs resource selection.

FIG. 4 is a diagram for explaining an example (3) of V2X transmission mode. In the transmission mode for sidelink communication shown in FIG. 4, in step 1, the terminal 20A transmits PSCCH and PSSCH to the terminal 20B by using autonomously-selected resources. Similarly, the terminal 20B transmits PSCCH and PSSCH to the terminal 20A by using autonomously-selected resources (step 1). The transmission mode for sidelink communication shown in FIG. 4 may be referred to as "sidelink transmission mode 2a in NR." In sidelink transmission mode 2 in NR, the terminal 20 itself performs resource selection.

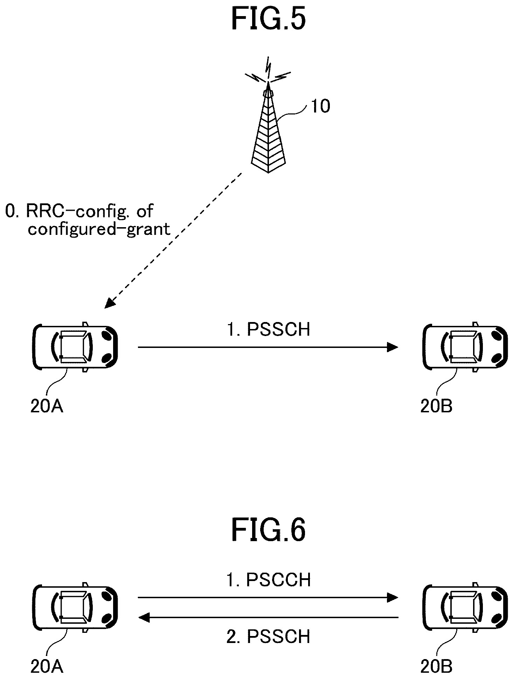

FIG. 5 is a diagram for explaining an example (4) of V2X transmission mode. In the transmission mode for sidelink communication shown in FIG. 5, in step 0, a sidelink resource pattern is transmitted from the base station 10 to the terminal 20A via RRC (Radio Resource Control) configuration, or pre-configured. Next, the terminal 20A transmits PSSCH to the terminal 20B based on that resource pattern (step 1). The transmission mode for sidelink communication shown in FIG. 5 may be referred to as "sidelink transmission mode 2c in NR."

FIG. 6 is a diagram for explaining an example (5) of V2X transmission mode. In the transmission mode for sidelink communication shown in FIG. 6, in step 1, the terminal 20A transmits sidelink scheduling to the terminal 20B via PSCCH. Next, the terminal 20B transmits PSSCH to the terminal 20A based on the received scheduling (step 2). The transmission mode for sidelink communication shown in FIG. 6 may be referred to as "sidelink transmission mode 2d in NR."

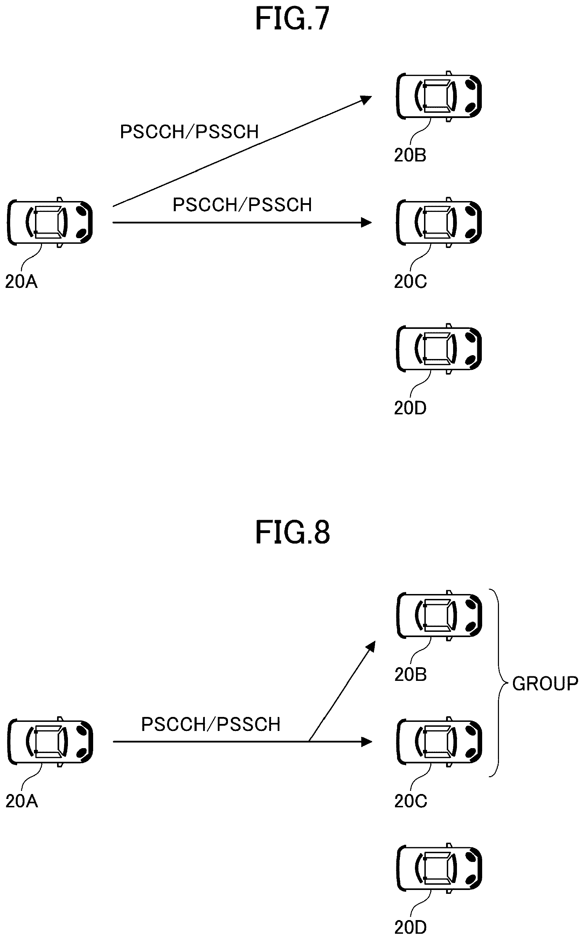

FIG. 7 is a diagram for explaining an example (1) of V2X communication type. The type of sidelink communication shown in FIG. 7 is unicast. The terminal 20A transmits PSCCH and PSSCH to terminals 20. In the example shown in FIG. 7, the terminal 20A performs unicast to the terminal 20B, and performs unicast to the terminal 20C.

FIG. 8 is a diagram for explaining an example (2) of V2X communication type. The type of sidelink communication shown in FIG. 8 is groupcast. The terminal 20A transmits PSCCH and PSSCH to a group to which one or more terminals 20 belong. In the example shown in FIG. 8, the group includes the terminal 20B and the terminal 20C, and the terminal 20A performs groupcast to the group.

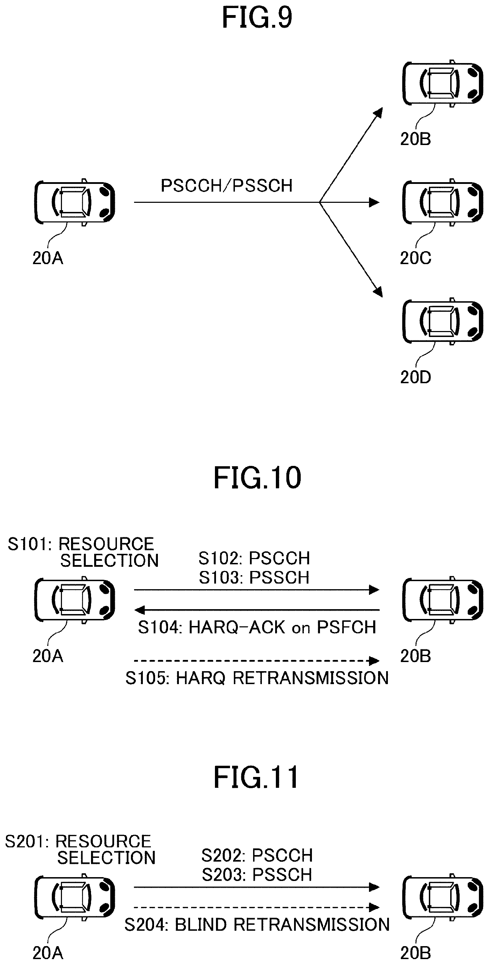

FIG. 9 is a diagram for explaining an example (3) of V2X communication type. The type of sidelink communication shown in FIG. 9 is broadcast. The terminal 20A transmits PSCCH and PSSCH to one or more terminals 20. In the example shown in FIG. 9, the terminal 20A performs broadcast to the terminals 20B, 20C, and 20D. Note that the terminal 20A shown in FIG. 7 to FIG. 9 may be referred to as a "header UE."

Also, in NR-V2X, it is anticipated that sidelink unicast and groupcast support HARQ (Hybrid Automatic Repeat reQuest). Furthermore, in NR-V2X, SFCI (Sidelink Feedback Control Information), which includes HARQ acknowledgment, is going to be defined. Furthermore, transmission of SFCI via PSFCH (Physical Sidelink Feedback CHannel) is under study.

Note that, in the following description, PSFCH is used to transmit HARQ-ACK in sidelink, but this is just an example. For example, it is equally possible to transmit HARQ-ACK in sidelink by using PSCCH, transmit HARQ-ACK in sidelink by using PSSCH, or transmit HARQ-ACK in sidelink by using other channels.

Hereinafter, for ease of explanation, all the information that the terminal 20 reports using HARQ will be referred to as "HARQ-ACK." This HARQ-ACK may be therefore referred to as "HARQ-ACK information." Also, to be more specific, the codebook that is applied to HARQ-ACK information reported from the terminal 20 to the base station 10 may be referred to as an "HARQ-ACK codebook." The HARQ-ACK codebook defines the bit sequences of HARQ-ACK information. Note that, in "HARQ-ACK," NACK is also transmitted in addition to ACK.

FIG. 10 is a sequence diagram that illustrates an example (1) of V2X operation. As shown in FIG. 10, the wireless communication system according to the embodiment of the present invention may have a terminal 20A and a terminal 20B. Note that, although there may be many user devices in reality, FIG. 10 only shows a terminal 20A and a terminal 20B to illustrate an example.

Hereinafter, when the terminals 20A, 20B, and others are not particularly distinguished, they will simply be referred to as "terminal(s) 20" or "user equipment/device(s)." Although FIG. 10 shows an example case in which the terminal 20A and the terminal 20B are both in the coverage of a cell, the operations according to the embodiment of the present invention are applicable even when the terminal 20B is located outside the coverage.

As mentioned earlier, the terminal 20 in this embodiment refers to, for example, a device that is mounted on a vehicle such as an automobile, and has a cellular communication function as a UE in LTE or NR, and a sidelink function. The terminal 20 may also be a general mobile terminal (smartphone, etc.). Also, the terminal 20 may be an RSU. This RSU may be a UE-type RSU having a UE's functions, or may be a gNB-type RSU having a base station device's functions.

Note that the terminal 20 need not be a device with one housing, and, for example, assuming a case in which a variety of sensors are distributed and placed inside a vehicle, the device that these sensors serve as together may be a terminal 20.

Also, the details of the processing of sidelink transmitting data by the terminal 20 are basically the same as the details of the processing of UL transmitting data in LTE or NR. For example, the terminal 20 generates complex-valued symbols by scrambling and modulating the codeword of transmitting data, maps the complex-valued symbols (transmitting signal) to one or two layers, and performs precoding thereof. Then, the precoded complex-valued symbols are mapped to resource elements to generate a transmitting signal (for example, a complex-valued time-domain SC-FDMA signal), which is then transmitted from each antenna port.

Note that the base station 10 has a cellular communication function to serve as a base station in LTE or NR, and functions to enable the terminal 20 of this embodiment to communicate (for example, resource pool configuration, resource allocation, etc.). Also, the base station 10 may be an RSU (gNB-type RSU).

Also, in the wireless communication system according to the embodiment of the present invention, the signal waveform that the terminal 20 uses in SL or UL may be OFDMA, SC-FDMA, or other signal waveforms.

In step S101, the terminal 20A autonomously selects the resources to use for PSCCH and PSSCH, through a resource selection window having a predetermined duration. The resource selection window may be configured from the base station 10 to the terminal 20. Here, as for the predetermined duration of the resource selection window, the duration may be determined by the conditions of implementation of terminals such as the processing time or the maximum allowable packet delay time, or the duration may be determined in advance by the specifications, in which case this predetermined duration may be referred to as an "interval in the time domain."

In step S102 and step S103, using the resources selected autonomously in step S101, the terminal 20A transmits SCI (Sidelink Control Information) on PSCCH and/or PSSCH, and transmits SL data on PSSCH. For example, the terminal 20A may transmit PSCCH by using time-domain resources that are at least partially the same as the time-domain resources for PSSCH, and by using frequency-domain resources that are adjacent to the frequency-domain resources for PSSCH.

The terminal 20B receives the SCI (PSCCH and/or PSSCH) and SL data (PSSCH) transmitted from the terminal 20A. The received SCI may include information about the PSFCH resources for the terminal 20B to use to transmit HARQ-ACK in response to the reception of the data. The terminal 20A may include and transmit information about the autonomously-selected resources in SCI.

In step S104, the terminal 20B transmits HARQ-ACK in response to the received data, to the terminal 20A, by using PSFCH resources that are determined from the SCI received.

In step S105, when the HARQ-ACK received in step S104 indicates a request for retransmission, that is, when this HARQ-ACK is a NACK (Negative ACKnowledgment), the terminal 20A retransmits PSCCH and PSSCH to the terminal 20B. The terminal 20A may retransmit PSCCH and PSSCH by using autonomously-selected resources.

Note that, if HARQ control with HARQ feedback is not executed, step S104 and step S105 need not be performed.

FIG. 11 is a sequence diagram that shows an example (2) of V2X operation. Blind retransmission may be without HARQ control, which is for improving the transmission success rate or the reaching distance.

In step S201, the terminal 20A autonomously selects the resources to use for PSCCH and PSSCH through a resource selection window having a predetermined duration. The resource selection window may be configured from the base station 10 to the terminal 20.

In step S202 and step S203, using the resources selected autonomously in step S201, the terminal 20A transmits SCI on PSCCH and/or PSSCH, and transmits SL data on PSSCH. For example, the terminal 20A may transmit PSCCH by using time-domain resources that are at least partially the same as the time-domain resources for PSSCH, and by using frequency-domain resources that are adjacent to the frequency-domain resources for PSSCH.

In step S204, using the resource selected autonomously in step S201, the terminal 20A retransmits SCI on PSCCH and/or PSSCH, and SL data on PSSCH, to the terminal 20B. The retransmission in step S204 may be performed multiple times.

Note that, when blind retransmission is not performed, step S204 need not be performed.

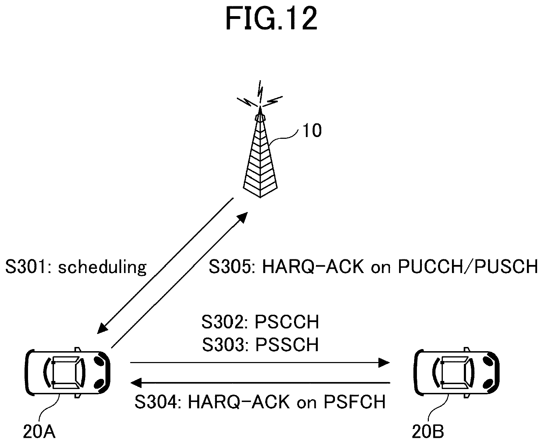

FIG. 12 is a sequence diagram that shows an example (3) of V2X operation. The base station 10 may perform sidelink scheduling. That is, the base station 10 may determine the sidelink resources to be used by the terminal 20, and transmit information that indicates these resources, to the terminal 20. Furthermore, when HARQ control with HARQ feedback is employed, the base station 10 may transmit information that indicates the resources for PSFCH, to the terminal 20.

In step S301, the base station 10 performs SL scheduling by transmitting DCI (Downlink Control Information) to the terminal 20A on PDCCH. Hereinafter, DCI for SL scheduling will be referred to as "SL-scheduling DCI" for ease of explanation.

Furthermore, step S301 assumes that the base station 10 also transmits DCI for DL scheduling (which may be referred to as "DL assignment") to the terminal 20A on PDCCH. Hereinafter, DCI for DL scheduling will be referred to as "DL-scheduling DCI" for ease of explanation. The terminal 20A, having received the DL-scheduling DCI, receives the DL data on PDSCH by using the resources designated by the DL-scheduling DCI.

In step S302 and step S303, using the resources designated by the SL-scheduling DCI, the terminal 20A transmits SCI (Sidelink Control Information) on PSCCH and/or PSSCH, and transmits SL data on PSSCH. Note that the SL-scheduling DCI may designate the resources for PSSCH alone. In this case, for example, the terminal 20A may transmit PSCCH by using time-domain resources that are at least partially the same as the time-domain resources for PSSCH, and by using frequency-domain resources that are adjacent to the frequency-domain resources for PSSCH.

The terminal 20B receives the SCI (PSCCH and/or PSSCH) and SL data (PSSCH) transmitted from the terminal 20A. The SCI that is received on PSCCH and/or PSSCH includes information about the PSFCH resources for allowing the terminal 20B to transmit HARQ-ACK in response to the reception of the data.

This resource-related information is included in the DL-scheduling DCI or SL-scheduling DCI transmitted from the base station 10 in step S301. The terminal 20A obtains this resource-related information from the DL-scheduling DCI or SL-scheduling DCI, and places it in SCI. Alternatively, arrangements may be made such that the DCI transmitted from the base station 10 does not include this resource-related information, and, instead, the terminal 20A autonomously includes this resource-related information in SCI and transmits it.

In step S304, using PSFCH resources that are determined from the SCI received, the terminal 20B transmits HARQ-ACK in response to the received data, to the terminal 20A.

In step S305, for example, at a timing (for example, a slot-based timing) designated by the DL-scheduling DCI (or the SL-scheduling DCI), the terminal 20A transmits HARQ-ACK by using the PUCCH (Physical Uplink Control CHannel) resources designated by the DL-scheduling DCI (or the SL-scheduling DCI), and the base station 10 receives the HARQ-ACK. This HARQ-ACK codebook may include HARQ-ACK that is received from the terminal 20B or HARQ-ACK that is generated based on unreceived PSFCH, as well as HARQ-ACK in response to the DL data. However, when, for example, no DL data is allocated, then no HARQ-ACK to DL data is included. In NR Rel. 16, the HARQ-ACK codebook contains no HARQ-ACK in response to DL data.

Note that, if HARQ control with HARQ feedback is not executed, step S304 and/or step S305 need not be performed.

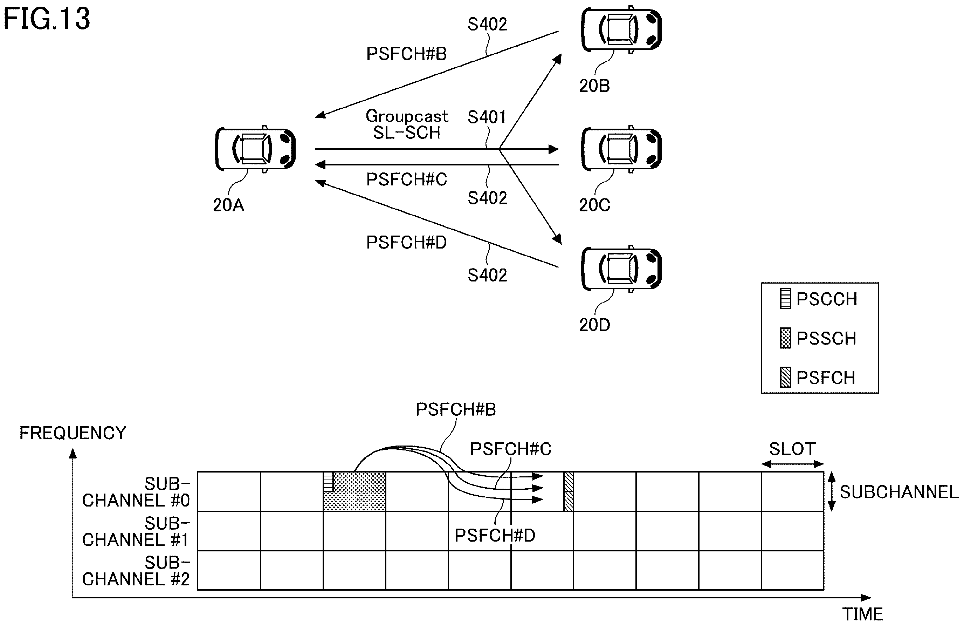

FIG. 13 is a sequence diagram that shows an example (4) of V2X operation. As mentioned earlier, NR sidelink supports transmission of HARQ acknowledgment on PSFCH. Note that, as for the format of PSFCH, a format that is the same as or similar to PUCCH (Physical Uplink Control CHannel) format 0 is available for use, for example. That is, the format of PSFCH may be a sequence-based format, in which the PRB (Physical Resource Block) size is 1, and in which ACK and NACK may employ a sequence-based format, in which case ACK and NACK are distinguished based on differences between their sequences and/or cyclic shifts. The format of PSFCH is by no means limited to this. PSFCH resources may be placed in the last symbol or a number of symbols at the end of the slot. Also, a period N may be configured or pre-configured for PSFCH resources. The period N may be configured or pre-configured in units of slots.

In FIG. 13, the vertical axis is the frequency domain, and the horizontal axis is the time domain. PSCCH may be placed in one symbol at the beginning of the slot, may be placed in a number of symbols starting from the beginning of the slot, or may be placed in a number of symbols starting from a symbol not at the beginning of the slot. PSFCH may be placed in one symbol at the end of the slot, or may be placed in a number of symbols at the end of the slot. Note that "the beginning of the slot" and "the end of the slot" above may not take into account the symbol for AGC (Automatic Gain Control) and the symbol for switching between transmission and reception. For example, if one slot is comprised of 14 symbols, "the beginning of the slot" and "the end of the slot" may refer to the symbols at the beginning and the end of 12 symbols, not including the symbols at the beginning and the end. In the example shown in FIG. 13, three subchannels are configured in the resource pool, and two PSFCHs are placed three slots after the slot in which a PSSCH is placed. The arrows from the PSSCH to the PSFCHs show examples of PSFCHs associated with a PSSCH.

If the groupcast in NR-V2X is groupcast option 2, in which ACK or NACK is transmitted as HARQ acknowledgment, the resources to be used to transmit and receive PSFCH need to be determined. As shown in FIG. 13, in step S401, the terminal 20A, which is the transmitting terminal 20, performs groupcast to the terminal 20B, terminal 20C, and terminal 20D, which are the receiving terminals 20, via SL-SCH. In subsequent step S402, the terminal 20B, terminal 20C, and terminal 20D transmit HARQ acknowledgments to the terminal 20A, the terminal 20B by using PSFCH #B, the terminal 20C by using PSFCH #C, and the terminal 20D by using PSFCH #D. Now, as shown in the example of FIG. 13, if the number of PSFCH resources that are available is less than the number of receiving terminals 20 belonging to the group, it is necessary to determine how to allocate the PSFCH resources. Note that the transmitting terminal 20 may keep track of the number of receiving terminals 20 in groupcast. Note that, in groupcast option 1, only NACK is transmitted as HARQ acknowledgment, and no ACK is transmitted.

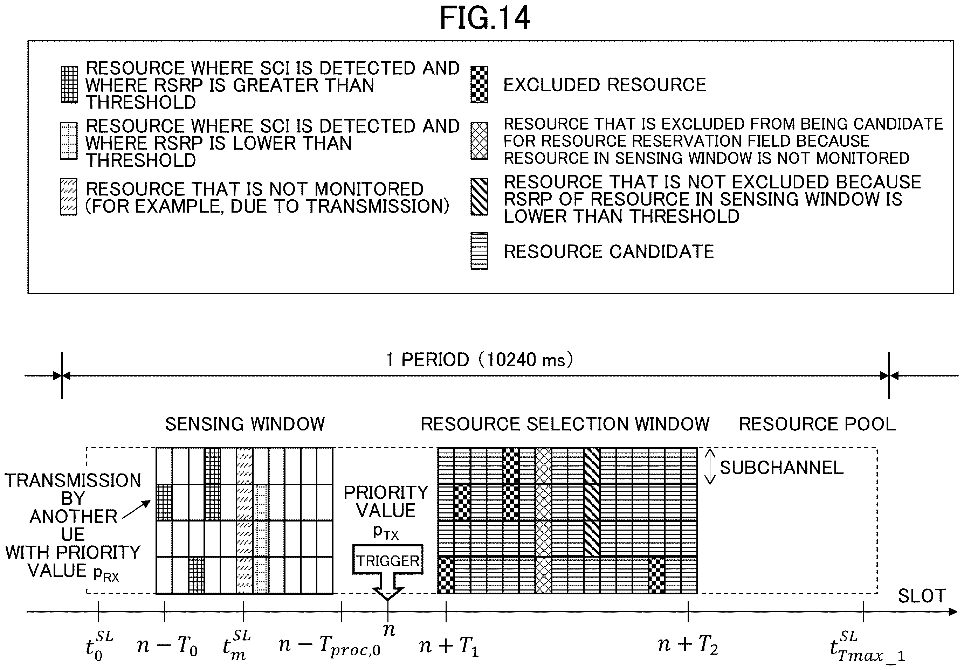

FIG. 14 is a diagram that illustrates an example of sensing operation in NR. In resource allocation mode 2, the terminal 20 selects the resources for transmission and performs transmission. As shown in FIG. 14, the terminal 20 performs sensing in a sensing window in the resource pool. Sensing allows the terminal 20 to receive the resource reservation field or the resource assignment field included in SCI transmitted from other terminals 20, and, based on these fields, identify the resource candidates that are available, in the resource selection window in the resource pool. The terminal 20 then randomly selects resources from the available resource candidates.

Also, as shown in FIG. 14, the resource pool may be configured to have a period. For example, the period may be a duration of 10,240 milliseconds. FIG. 14 is an example in which slot t₀^{SL} to slot t_{Tmax-1}^{SL} are set configured as a resource pool. The range of the resource pool in each period may be determined by, for example, a bitmap.

Also, as shown in FIG. 14, assume that a transmission trigger pertaining to the terminal 20 occurs in a slot n, and the priority value of this transmission is p_{TX}. In the sensing window from slot n - T₀ to the slot immediately before slot n - T_{proc, 0}, the terminal 20 can detect, for example, if another terminal 20 is performing transmission with a priority p_{RX}. If SCI is detected in the sensing window and its RSRP (Reference Signal Received Power) is greater than a threshold, the resources that correspond to the SCI in the resource selection window are excluded. Also, if SCI is detected in the sensing window and its RSRP is lower than the threshold, the resources that correspond to the SCI in the resource selection window are not excluded. The threshold may be, for example, a threshold Th_{pTX, pRX} that is configured or defined per resource in the sensing window based on priority p_{TX} and priority p_{RX}.

Also, as is the case with slot tₘ^{SL} shown in FIG. 14, when a resource in the sensing window is not monitored due to, for example, transmission, then, the resource in the resource selection window that corresponds to the unmonitored resource in the sensing window and that is targeted as a candidate by the resource reservation information is excluded.

In the resource selection window from slot n + T₁ to slot n + T₂, as shown in FIG. 14, resources occupied by other UEs are identified, and resources that do not include these resources are resource candidates that are available. If a set of resource candidates that are available is S_{A} and this S_{A} is less than 20% of the resource selection window, then, it is possible to increase the threshold Th_{pTX,pRX}, which is configured per resource in the sensing window, by 3 dB, and identify the resources again. That is, by increasing the threshold Th_{pTX,pRX} and identifying the resources again, fewer resources may be excluded because the RSRP is less than the threshold, so that the resource candidate set S_{A} may become 20% or more of the resource selection window. If S_{A} is less than 20% of the resource selection window, the operation of increasing the threshold Th_{pTX,pRX}, which is configured per resource in the sensing window, by 3 dB and identifying the resources again may be repeated.

A lower layer of the terminal 20 may report S_{A} to a higher layer. The higher layer of the terminal 20 may perform random selection for S_{A} and determines the resources to use. The terminal 20 may perform sidelink transmission by using the resources determined thus.

Although the operation of a transmitting terminal 20 has been described with reference to FIG. 14 above, a receiving terminal 20 may detect data transmission from another terminal 20 based on the result of sensing or partial sensing, and receive data from that terminal 20.

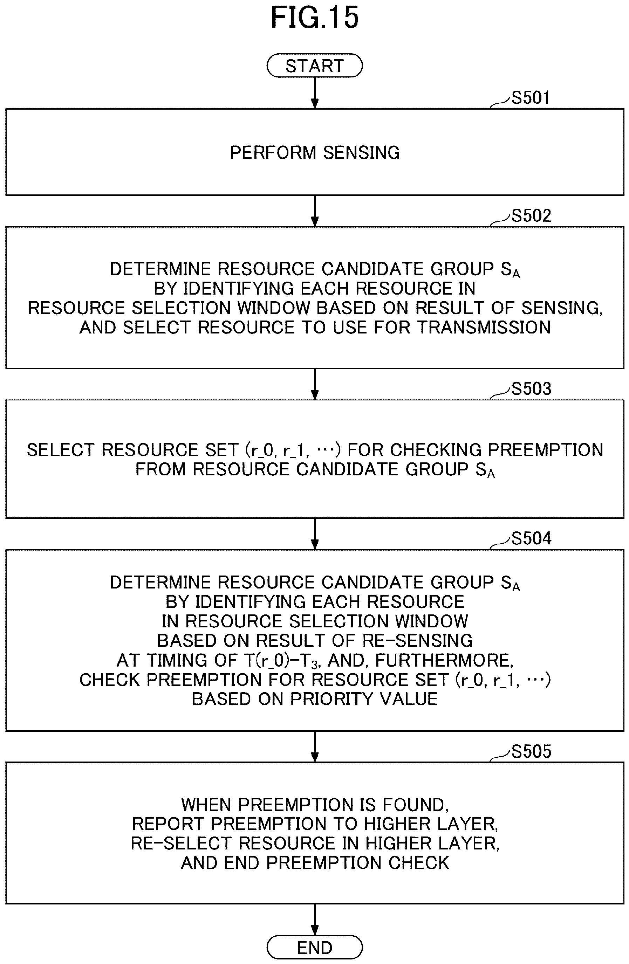

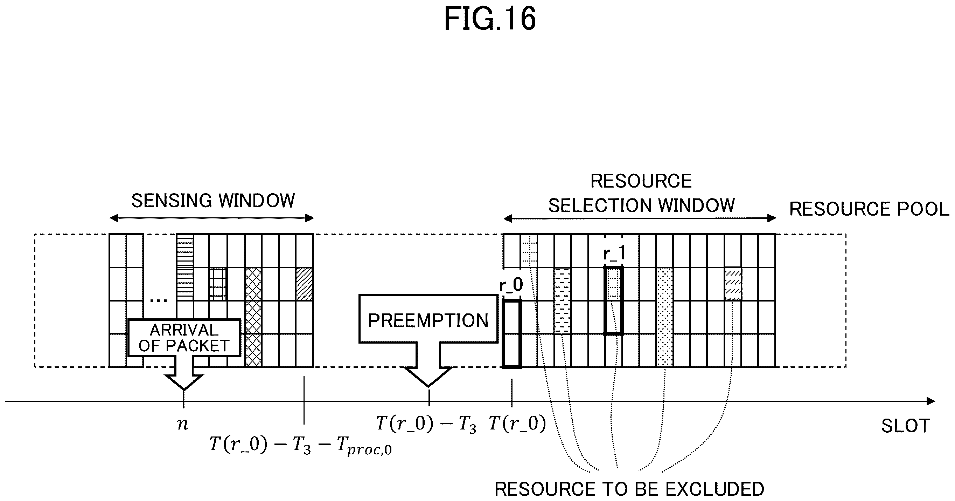

FIG. 15 is a flowchart that illustrates an example of preemption in NR. FIG. 16 is a diagram that illustrates an example of preemption in NR. In step S501, the terminal 20 performs sensing through a sensing window. When the terminal 20 operates in power saving mode, sensing may be performed in a predetermined, limited period of time. Subsequently, the terminal 20 determines a set of resource candidates, S_{A}, by identifying each resource in the resource selection window based on the result of sensing, and selects the resources to use in transmission (S502). Subsequently, the terminal 20 selects a resource set (r_0, r_1, ...) for checking preemption from the resource candidate set S_{A} (S503). This resource set may be reported from a higher layer to the PHY layer as resources for determining whether or not preemption has occurred.

In step S504, the terminal 20 determines the resource candidate set S_{A} by re-identifying each resource in the resource selection window based on the result of sensing, at the timing of T(r_0) - T₃ shown in FIG. 16, and, furthermore, checks preemption with respect to the resource set (r_0, r_1, ...) based on priority values. For example, in r_1 shown in FIG. 16, SCI transmitted from another terminal 20 is detected by re-sensing, and therefore r_1 is not included in S_{A}. If preemption is enabled and the value of prio_RX, which indicates the priority of SCI transmitted from another terminal 20, is lower than the value of prio_TX, which indicates the priority of the transport block to be transmitted from the subject terminal 20, the terminal 20 determines that resource r_1 is preempted. Note that the lower the priority value, the higher the priority. That is, when the value prio_RX indicating the priority of SCI transmitted from another terminal 20 is greater than the value prio_TX indicating the priority of the transport block to be transmitted from the subject terminal 20, the terminal 20 does not exclude resource r_1 from S_{A}. Alternatively, in the event preemption is enabled only for a specific priority value (for example, when sl-PreemptionEnable is one of pl1, pl2, ..., pl8), this priority value is "prio_pre." Then, if the value prio_RX indicating the priority of SCI transmitted from another terminal 20 is lower than prio_pre, and prio_RX is lower than the value prio_TX indicating the priority of the transport block to be transmitted from the subject terminal 20, the terminal 20 determines that resource r_1 is preempted.

If preemption is found in step S504, the terminal 20 reports the preemption to the higher layer in step S505, and thereupon the resources are re-selected in the higher layer, and the preemption check ends.

Note that, when re-evaluation is carried out instead of preemption check, after the resource candidate set S_{A} is determined in above step S504, if none of the resources in the resource set (r_0, r_1, ...) is included in S_{A}, these resources are not used, and the resources are re-selected in the higher layer.

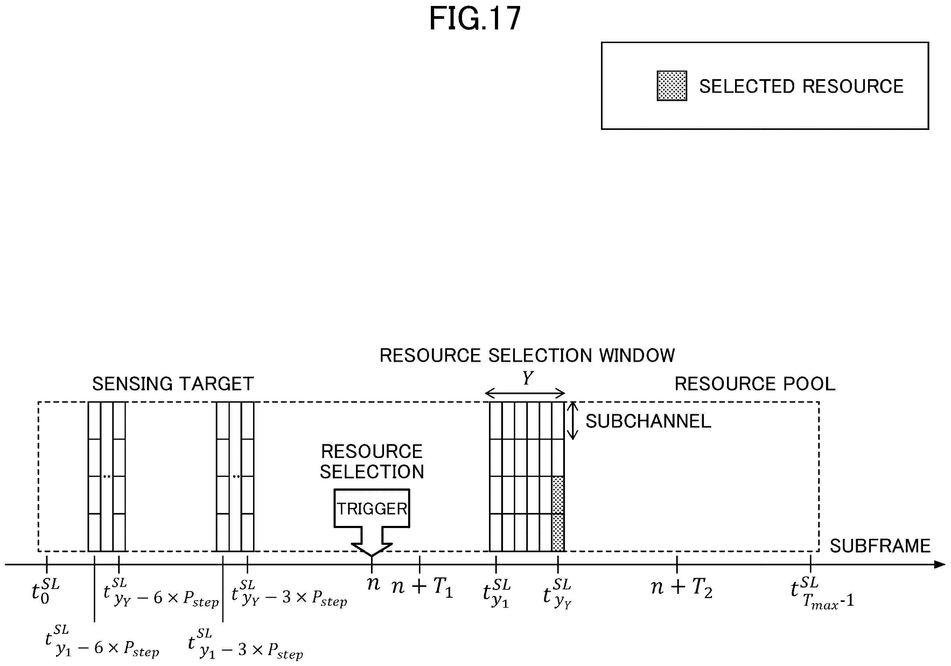

FIG. 17 is a diagram that illustrates an example of partial sensing operation in LTE. When partial sensing is configured from a higher layer in LTE sidelink, the terminal 20 selects the resources and performs transmission as shown in FIG. 17. Partial sensing allows the terminal 20 to receive the resource reservation field that is included in SCI transmitted from another terminal 20, and identify, based on this field, the resource candidates that are available in the resource selection window in the resource pool. The terminal 20 then randomly selects the resources from the available resource candidates.

FIG. 17 shows an example in which subframe t₀^{SL} to subframe t_{Tmax-1}^{SL} are configured as a resource pool. The target range of the resource pool may be configured, for example, by a bitmap. Assume that a transmission trigger occurs at the terminal 20 in a subframe n, as shown in FIG. 17. As shown in FIG. 17, among subframe n + T₁ to subframe n + T₂, Y subframes from subframe t_{y1}^{SL} to subframe t_{yY}^{SL} may be set as a resource selection window.

The terminal 20 is able to detect, for example, if another terminal 20 is performing transmission in one or more sensing targets among subframe t_{y1-k×Pstep}^{SL} to subframe t_{yY-k×Pstep}^{SL}, which are Y subframes long. k may be determined by a 10-bit bitmap, for example. FIG. 17 shows an example in which the third and sixth bits in the bitmap are set to "1," which indicates that partial sensing is to be performed. That is, in FIG. 17, subframe t_{y1-6×Pstep}^{SL} to subframe t_{yY-6×Pstep}^{SL} and subframe t_{y1-3×Pstep}^{SL} to subframe t_{yY-3×Pstep}^{SL} are set as sensing targets. As mentioned earlier, the k-th bit in the bitmap may correspond to the sensing window from subframe t_{y1-k×Pstep}^{SL} to subframe t_{yY-k×Pstep}^{SL}. Note that yᵢ corresponds to the index (1 ... Y) in the Y subframes.

Note that k may be configured or provided in advance in the 10-bit bitmap, and Pₛₜₑₚ may be 100 ms. However, when DL and UL carriers perform SL communication, Pₛₜₑₚ may be (U/(D+S+U))*100 ms. U is the number of UL subframes, D is the number of DL subframes, and S is the number of special subframes.

If SCI is detected among the above sensing targets and shows an RSRP greater than a threshold, the resources in the resource selection window that correspond to the resource reservation field in the SCI are excluded. Also, if SCI is detected among the sensing targets and shows an RSRP lower than the threshold, the resources in the resource selection window that correspond to the resource reservation field in the SCI are not excluded. This threshold may be, for example, the threshold Th_{pTX,pRX}, which is configured or defined per sensing-target resource based on transmitting priority value p_{TX} and receiving priority value p_{RX}.

Referring to FIG. 17, in the resource selection window that is configured over Y subframes in the section [n + T₁, n + Tz], the terminal 20 identifies the resources occupied by other UEs, so that the resources excluding these resources are candidates for available resources. Note that the Y subframes need not be consecutive. Assuming that the set of available resource candidates is S_{A}, if S_{A} is less than 20% of the resources in the resource selection window, the threshold Th_{pTX,pRX}, which is configured per sensing-target resource, may be increased by 3 dB, and the resources may be identified again.

That is, by increasing the threshold Th_{pTX,pRX} and identifying the resources again, fewer resources may be excluded by having an RSRP lower than the threshold. Furthermore, the RSSI of each resource in S_{A} may be measured, and the resource with the lowest RSSI may be added to a set S_{B}. The operation of adding the resource included in S_{A} with the smallest RSSI to S_{B} may be repeated until the resource candidate set S_{B} reaches 20% or more of the resource selection window.

A lower layer of the terminal 20 may report S_{B} to a higher layer. The higher layer of the terminal 20 may perform random selection with S_{B} and determine the resources to use. The terminal 20 may perform sidelink transmission by using the determined resources. Note that, once resources are secured, the terminal 20 may skip sensing for a predetermined number of times (for example, Cᵣₑₛₑₗ times) and use the resources periodically.

Now, in NR release 17 sidelink, studies on power saving based on random resource selection and partial sensing are underway. For example, for power saving, random resource selection and partial sensing in LTE release 14 sidelink may be applied to resource allocation mode 2 of NR release 16 sidelink. The terminal 20 that employs partial sensing performs reception and sensing only in specific slots in the sensing window.

Also, in NR release 17 sidelink, eURLLC (enhanced Ultra Reliable Low Latency Communication) is studied with inter-terminal coordination (inter-UE coordination) as a baseline. For example, the terminal 20A may share information that indicates a resource set with the terminal 20B, and the terminal 20B may take this information into account when selecting the resources for transmission.

For example, as a method of resource allocation in sidelink, the terminal 20 may perform full sensing as shown in FIG. 14. Also, the terminal 20 may perform partial sensing, in which, unlike full sensing, resources are identified by sensing only limited resources, and in which resources are selected from the resource set identified thus. Furthermore, the terminal 20 need not exclude resources from the resources in the resource selection window, and may perform random selection instead, in which the resources identified in the resource selection window are a resource set, and resources are selected from this set of identified resources.

Note that the method of performing random selection during resource selection and using sensing information during re-evaluation or preemption check may be treated as partial sensing, or may be treated as random selection.

Note that following (1) and (2) may be applied as sensing operations.

### (1) Periodic-based partial sensing

An operation to determine sensing slots based on the periodicity of reservation (reservation periodicity) in a mechanism in which only part of the slots are subject to sensing. Note that the reservation periodicity is a value associated with the resource reservation period field.

### (2) Contiguous partial sensing

An operation to determine sensing slots based on aperiodic reservation in a mechanism in which only part of the slots are subject to sensing. Note that aperiodic reservation is a value associated with the time resource assignment field.

In release 17, the operation may be defined assuming that there are three types of terminals 20. One is type A; the type-A terminal 20 does not have the capability to receive any sidelink signals or channels. However, reception of PSFCH and S-SSB may be an exception.

Another one is type B; the type-B terminal 20 does not have the capability to receive any sidelink signals or channels, except for reception of PSFCH and S-SSB.

Another one is type D; the type-D terminal 20 has the capability to receive all the sidelink signals and channels defined in release 16. However, this does not preclude reception of some sidelink signals and channels.

Note that UE types other than above type A, type B, and type D may be assumed, and UE types and UE capabilities may or may not be associated with each other.

Also, in release 17, multiple resource allocation methods may be configured for a given resource pool. Also, SL-DRX (discontinuous reception) is supported as one power saving function. That is, the receiving operation is performed only in a predetermined section in time.

In resource allocation mode 2, in which the terminal 20 selects resources autonomously, the terminal 20 receives resource reservation information pertaining to other terminals 20 through sensing, and selects the resources to use in transmission based on this resource reservation information. Nevertheless, resource conflicts might occur even if every transmitting terminal 20 selects resources based on sensing. There are situations of communication that need to be considered, such as the ones that follow, in order to improve the reliability of communication and reduce the delays.

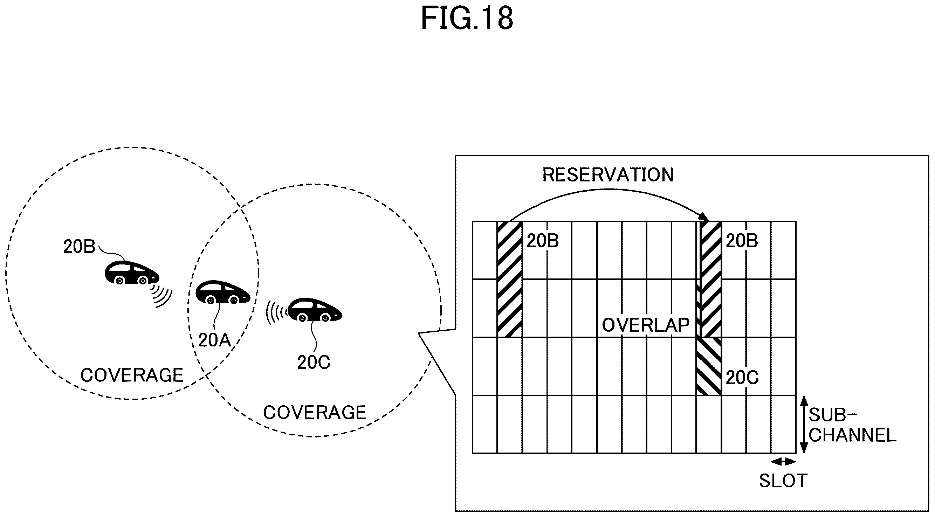

FIG. 18 is a diagram that illustrates an example (1) situation of communication. To illustrate an example of the hidden node problem, as shown in FIG. 18, when the terminal 20B tries to perform transmission to the terminal 20A, a terminal 20C, which cannot be detected from the terminal 20A, may be present in a location where the terminal 20C interferes with the receiving terminal 20B. For example, if the terminal 20C performs transmission by using time-domain resources that are reserved by the terminal 20A, an overlap of resources occurs when the terminal 20B receives the transmission.

Also, since sidelink is half-duplex communication, a conflict of resources might occur when both terminals 20 perform transmission.

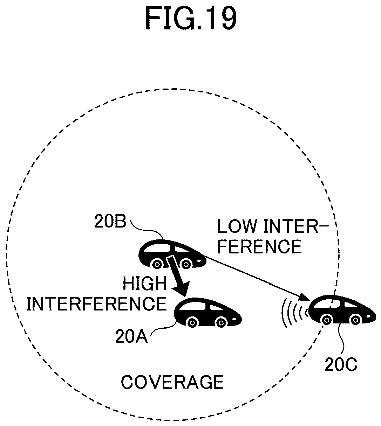

FIG. 19 is a diagram that illustrates an example (2) situation of communication. To illustrate an example of the near-far problem, as shown in FIG. 19, when the terminal 20C tries to perform transmission to the terminal 20A, the terminal 20B, which is detected with small power at the transmitting terminal 20C, may be present in a location where the terminal 20B interferes significantly with the receiving terminal 20A.

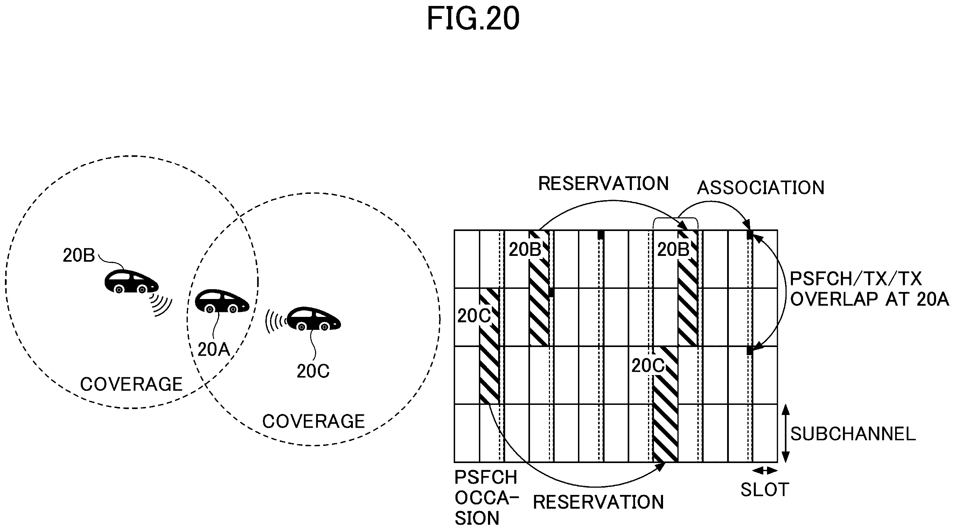

FIG. 20 is a diagram that illustrates an example (3) situation of communication. To illustrate an example of conflict of transmitting resources in the time domain, as shown in FIG. 20, PSFCH transmitting resources reserved for the terminal 20B or associated with PSSCH might overlap PSFCH transmitting resources reserved for the terminal 20C or associated with PSSCH at the terminal 20A. Power drops or decreases when multiple transmissions overlap. For example, the overlap of PSFCH and PSFCH shown in FIG. 20, an overlap of PSFCH and a UL channel, and so forth might occur.

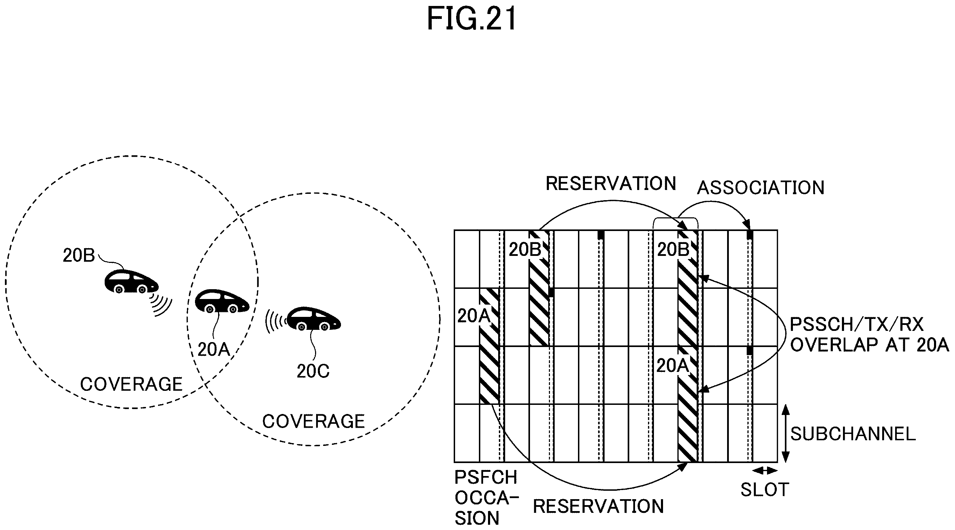

FIG. 21 is a diagram for explaining an example (4) situation of communication. To illustrate an example of conflict of receiving resources and transmitting resources in the time domain, as shown in FIG. 21, PSSCH reception in resources reserved for the terminal 20B and PSSCH transmission in resources reserved for the terminal 20A might overlap at the terminal 20A.

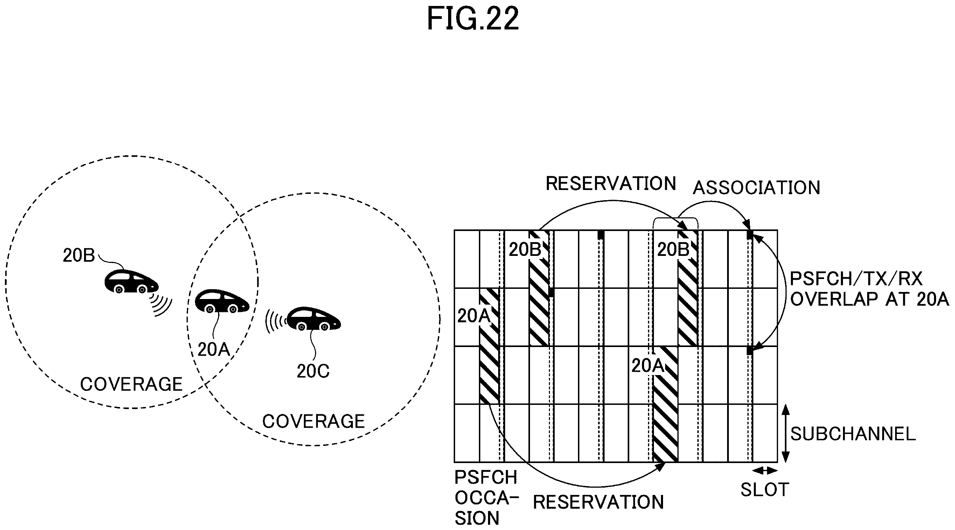

FIG. 22 is a diagram for explaining an example (5) situation of communication. To illustrate an example of conflict of transmitting resources and receiving resources in the time domain, as shown in FIG. 22, PSFCH that is associated with PSSCH reserved for the terminal 20B, and PSFCH that is associated with PSSCH reserved for the terminal 20A might overlap at the terminal 20A.

Inter-terminal coordination is studied as a technique for improving reliability and delay performance. For example, inter-terminal coordination method (1) and inter-terminal coordination method (2) shown below are under study. Hereinafter, the terminal 20 that transmits coordination information will be referred to as "UE-A," and the terminal 20 that receives the coordination information will be referred to as "UE-B."

### Inter-terminal coordination method (1)

For UE-B's transmission, a preferred resource set and/or a non-preferred resource set are transmitted from UE-A to UE-B.

### Inter-terminal coordination method (2)

When a conflict with another transmission or reception is expected, possible or detected in a resource indicated by SCI received from UE-B, UE-A transmits this fact to UE-B. Note that a "resource set" may replace the "fact."

Also, to enable inter-terminal coordination, for example, following (1) to (6) may be determined.
(1) When and how the terminal 20A determines the content of the resource set. UL scheduling may be taken into account.
(2) When the terminal 20A reports the resource set to the terminal 20B, and which terminal 20 reports the resource set.
(3) Which terminal 20 reports the resource set to which terminal 20, and how.
(4) How the terminal 20A reports the resource set. What reporting method is used, and whether it is reported explicitly or implicitly.
(5) When and how the terminal 20B receives or does not receive the resource set. Also, when and how the terminal 20B reflects or does not reflect the received resource set in the selection of resources for transmission.
(6) How to define or not to define the association between inter-terminal coordination support and signaling, and the type of casting.

In inter-terminal coordination method (1) above, UE-B may operate as indicated in following (1) to (4):
(1) UE-B's resources that are used to select or re-select the resources for transmission, may be selected based on both the result of sensing by UE-B and coordination information received from UE-A. Note that this may be applied only when UE-B's sensing results are available. If UE-B holds no sensing result that is available, the above resources may be selected based solely on coordination information received from UE-A.
(2) UE-B's resources that are used to select or re-select the resources for transmission may be selected based solely on coordination information received from UE-A.
(3) UE-B's re-selected resources may be determined based on coordination information received from UE-A.
(4) UE-B's resources that are used to select or re-select the resources for transmission may be selected based on coordination information received from UE-A.

In the above inter-terminal coordination method (2), UE-B may operate as indicated in following (1) and (2).
(1) UE-B may determine the re-selected resources based on coordination information received from UE-A.
(2) UE-B may determine whether retransmission is needed or not, based on coordination information received from UE-A.

Now it is necessary to determine which terminal 20 may serve as UE-A. Also, it is necessary to determine which terminal 20 may serve as UE-B. For example, UE-A may or may not be limited to a destination UE, to which UE-B transmits transport blocks. Also, in the event UE-A is not limited to a destination UE, it is then necessary to determine how UE-A transmits coordination information to UE-B. Also, how UE-B should operate upon receiving coordination information from UE-A needs to be determined.

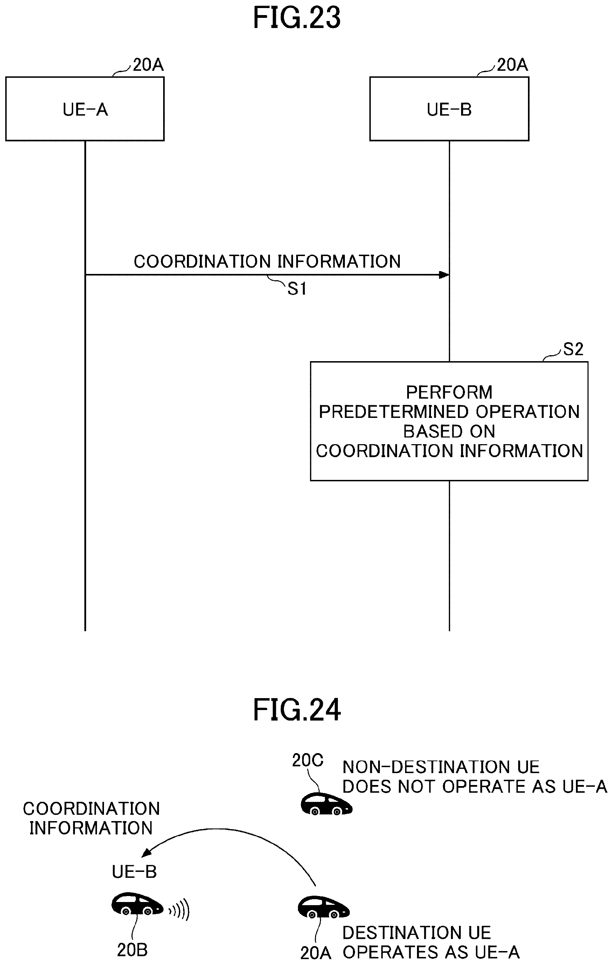

FIG. 23 is a sequence diagram for explaining an example of inter-UE coordination according to the embodiment of the present invention. In step S1, UE-A transmits coordination information to UE-B. In subsequent step S2, UE-B performs a predetermined operation based on the coordination information.

In above inter-terminal coordination method (1) or inter-terminal coordination method (2), assume that UE-A is a terminal 20 that satisfies predetermined conditions. For example, UE-A and UE-B may operate as per proposal (1) to proposal (5) that follow.

### Proposal (1)

UE-A may be limited to a destination terminal 20 to which UE-B's transport blocks are addressed.

### Proposal (2)

UE-A may be a terminal 20 to which UE-B's transport blocks are not addressed. Note that a destination terminal 20 may or may not be included.

### Proposal (3)

In proposal 2, UE-A may transmit coordination information to UE-B by a predetermined method.

### Proposal (4)

In proposal 2, UE-B may perform a predetermined operation based on coordination information received from UE-A.

### Proposal (5)

Proposal 1 and proposal 2 may be switched based on predetermined conditions.

By limiting UE-A to a destination of UE-B's transport blocks, it is possible to determine which resources UE-B should use, based on communication quality at a terminal 20 where the transport blocks are received.

On the other hand, in the event UE-A is not limited to a destination of UE-B's transport blocks, it is possible to determine which resources UE-B should use, even when the terminal 20 that receives the transport blocks cannot detect the occurrence of a failure in UE-B's transmitting resources, by taking this failure into account.

Above proposal 1 will be described below in detail. FIG. 24 is a diagram for explaining an example (1) of inter-UE coordination according to an embodiment of the present invention. As shown in FIG. 24, UE-A may be limited to a destination terminal 20 of UE-B's transport blocks. UE-A may be a terminal 20 that is indicated by a UE-ID associated with UE-B's signal transmission. The UE-ID may be a layer 1 ID or may be a layer 2 ID. Note that "being a destination of transport blocks" as used herein may be replaced with "being targeted by UE-B."

Also, it is possible to assume that, when a reservation signal for transmission of varying transport blocks is transmitted from UE-B, the reserved resources are used for transmission to the same destination UE-A. For example, the reservation signal may be transmitted in the resource reservation period field.

Also, when UE-B transmits signals to a number of destinations, all of the destination terminals 20 may be UE-A's, or only some of the destination terminals 20 may be UE-A's. For example, a case in which signals are transmitted to multiple destinations may arise when signals are transmitted from UE-B in broadcast or in groupcast. Among these destination terminals 20, terminals 20 that are located in a communication range requirement may be UE-A's.

Among the destination terminals 20, terminals 20 at which the receiving RSRP of signals transmitted from UE-B is greater than or equal to a predetermined value may be UE-A's, or terminals 20 at which the receiving RSRP of signals transmitted from UE-B is less than or equal to the predetermined value may be UE-A's. When, among the destination terminals 20, terminals 20 at which the receiving RSRP of signals transmitted from UE-B is greater than or equal to a predetermined value are UE-A's, it is possible to design inter-UE coordination to operate such that the quality improves at terminals with greater need of data delivery. When, among the destination terminals 20, terminals 20 at which the receiving RSRP of signals transmitted from UE-B is less than or equal to the predetermined value are UE-A's, it becomes easier to share information that UE-B cannot detect.

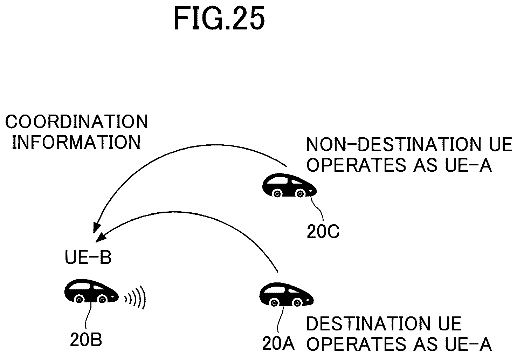

Above proposal 2 will be described in detail below. FIG. 25 is a diagram for explaining an example (2) of inter-UE coordination according to an embodiment of the present invention. As shown in FIG. 25, UE-A may be a terminal 20 not being the destination of transport blocks transmitted from UE-B. For example, UE-A may be a terminal 20 that is located in a predetermined distance from the destination terminal 20 of transport blocks transmitted from UE-B, or may be a terminal 20 that is located outside the predetermined distance. Note that "being a destination of transport blocks" as used herein may be replaced with "being targeted by UE-B."

Also, UE-A may be a terminal 20 at which the receiving RSRP of signals transmitted from UE-B or UE-A is greater than or equal to a predetermined value, or may be a terminal 20 at which the receiving RSRP is less than or equal to the predetermined value. Also, a terminal 20 that receives predetermined information from the destination terminal 20 of transport blocks transmitted from UE-B may be UE-A. This predetermined information may be a reservation signal, information related to the SL or UL resources to be transmitted, and so forth.

Also, UE-A may be a terminal 20 having certain capabilities. Also, UE-A may be a terminal 20 that establishes PC5-RRC connection with the destination terminal 20 of transport blocks transmitted from UE-B. Also, UE-A may be a terminal 20 that receives a predetermined command from a network.

Also, it is possible to assume that, when a reservation signal for transmission of varying transport blocks is transmitted from UE-B, the reserved resources are used for transmission to the same destination UE-A. For example, the reservation signal may be transmitted in the resource reservation period field.

Also, UE-A may be the destination UE of transport blocks transmitted from another UE (hereinafter "UE-C"). For example, a case in which time-domain resources and/or frequency-domain resources conflict, such as when UE-B's reserved resources or transmitting resources and UE-C's reserved resources or transmitting resources conflict with each other, may apply. Furthermore, for example, a case in which time-domain resources, frequency-domain resources, and/or code-domain resources conflict, such as when PSFCH resources that are associated with UE-B's reserved resources or transmitting resources conflict with PSFCH resources associated with UE-C's reserved resources or transmitting resources, may apply. Also, for example, a UE may be UE-A only when the UE has not successfully decoded the transport blocks received from UE-C, is going to transmit or has transmitted NACK, and for which retransmission may be performed in corresponding reserved resources.

Also, UE-Y may be UE-B when at least one of following conditions (1) to (7) is satisfied.
(1) Signal transmission is in progress or resources are reserved at UE-Y. The destination in this case may be UE-A, or may be a UE other than UE-A.
(2) UE-Y is capable of implementing above inter-terminal coordination method (1) or inter-terminal coordination method (2) .
(3) There are resources that allow UE-A to share information related to inter-terminal coordination method (1) or inter-terminal coordination method (2) with UE-Y.
(4) There is enough processing time to allow UE-A to share information related to inter-terminal coordination method (1) or inter-terminal coordination method (2), and/or there is enough processing time to allow UE-Y to receive information related to inter-terminal coordination method (1) or inter-terminal coordination method (2) and perform corresponding processes.
(5) The priority value of UE-Y's transport blocks is lower than the priority value of UE-C's transport blocks.
(6) UE-Y has transmitted, to UE-A, a signal that requests application of the above information related to inter-terminal coordination method (1) or inter-terminal coordination method (2) .
(7) A signal that UE-A receives from UE-Y shows an RSRP that is greater than or equal to a predetermined value. This predetermined value may be a value that is associated with the RSRP of UE-C's transport blocks, may vary per transport block's priority value, or may be configured or defined in advance.

Also, when following conditions (1) to (8) are satisfied, above inter-terminal coordination method (1) or inter-terminal coordination method (2) may be applied such that UE-X and UE-Y serve as UE-A and UE-B, respectively. UE-C is a UE other than UE-X and UE-Y. Note that some of following conditions (1) to (8) need not be satisfied.
(1) UE-X, UE-Y, and UE-C are present. There may be multiple UE-Xs, UE-Ys, and UE-Cs.
(2) UE-C transmits a transport block to UE-X to reserve future resources, and UE-X fails to decode the transport block.
(3) UE-C retransmits the transport block in the reserved resources.
(4) UE-Y reserves resources that overlap the above future resources in the time domain and/or the frequency domain. Any destination is applicable here.
(5) The priority value of UE-Y's signal for reservation is lower than the priority value of UE-C's signal for reservation.
(6) The receiving RSRP of UE-Y's signal for reservation is greater than a predetermined value.
(7) UE-X detects the above overlap and has resources for transmitting the signal related to inter-terminal coordination method (1) or inter-terminal coordination method (2) to UE-Y, and there is time for processing this transmission.
(8) UE-Y has a function to receive the signal related to inter-terminal coordination method (1) or inter-terminal coordination method (2), and after receiving the signal in the corresponding resources, has processing time for the future resources (for example, re-selection).

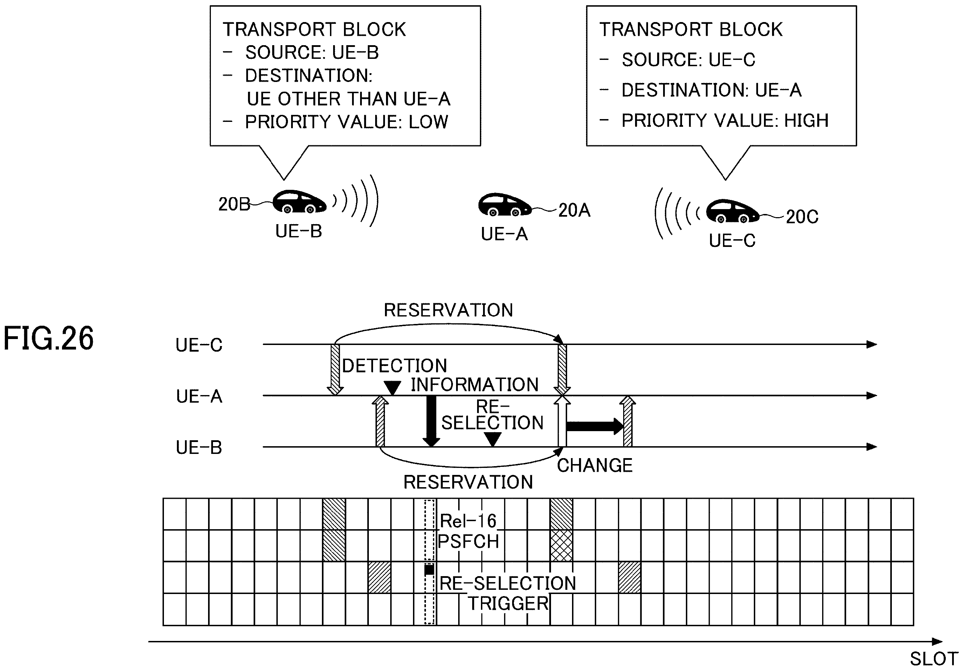

FIG. 26 is a diagram for explaining an example (3) of inter-UE coordination according to an embodiment of the present invention. For example, as shown in FIG. 26, a case in which time-domain resources and/or frequency-domain resources conflict, such as when UE-B's reserved resources or transmitting resources and UE-C's reserved resources or transmitting resources conflict with each other, may apply. When UE-A detects the conflict, UE-A transmits coordination information to UE-B. Upon receiving the coordination information, UE-B re-selects the resources. UE-B performs transmission to UE-A by using the re-selected resources.

Also, assuming that there are UE-A, UE-Y, and UE-Z when following condition (1) and/or condition (2) are satisfied, at least one of UE-Y and UE-Z may be made UE-B, or neither of them may be made UE-B, based on following rules (1) to (3).

### Condition (1)

Time-domain resources, frequency-domain resources, and/or code-domain resources conflict with each other, such as when UE-Y's reserved resources, transmitting resources, or PSFCH resources associated with them, and UE-Z's reserved resources, transmitting resources, or PSFCH resources associated with them conflict.

### Condition (2)

At least one of the destination of UE-Y's transmitting transport blocks and the destination of UE-Z's transmitting transport blocks is UE-A, and UE-A is able to employ inter-terminal coordination method (1) or inter-terminal coordination method (2).

### Rule (1)

If both UE-Y and UE-Z cannot employ above inter-terminal coordination method (1) or inter-terminal coordination method (2), neither UE-Y nor UE-Z needs to be UE-B.

### Rule (2)

If one of UE-Y and UE-Z can employ above inter-terminal coordination method (1) or inter-terminal coordination method (2), the UE that can employ above inter-terminal coordination method (1) or inter-terminal coordination method (2) may be UE-B, or neither UE needs to be UE-B.

### Rule (3)

If both UE-Y and UE-Z can employ above inter-terminal coordination method (1) or inter-terminal coordination method (2) and one is to perform transmission with a higher priority value than the other one, the UE to perform the transmission with the lower priority value may be UE-B. Also, if both UE-Y and UE-Z can employ above inter-terminal coordination method (1) or inter-terminal coordination method (2) and both perform transmission with equal priority value, either UE may be UE-B depending on the implementation of UE-A, the UE that reserved the resources first may be UE-B, the UE that reserved the resources later may be UE-B, neither UE may be UE-B, or the source UE of the transmission showing the lower receiving RSRP at UE-A may be UE-B. Also, if both UE-Y and UE-Z can employ above inter-terminal coordination method (1) or inter-terminal coordination method (2), both perform transmission with equal priority value, and only one of the UEs makes UE-A the destination of its transmitting transport blocks, the UE, whose transmitting transport blocks are not addressed to UE-A, may be UE-B. Also, if both UE-Y and UE-Z can employ above inter-terminal coordination method (1) or inter-terminal coordination method (2), both perform transmission with equal priority value, and both UEs make UE-A the destination of transport blocks, either UE may be UE-B depending on the implementation of UE-A, the UE that reserved the resources first may be UE-B, the UE that reserved the resources later may be UE-B, neither UE may be UE-B, or the source UE of the transmission showing the lower receiving RSRP at UE-A may be UE-B.

Note that a rule related to receiving RSRP may be applied before applying above rule (3), or in combination with above rule (3). The rule related to receiving RSRP is, for example, the one in which the source UE of the transmission with the lower receiving RSRP at UE-A is UE-B.

Above proposal 3 will be described below in detail. In proposal 2 above, UE-A may transmit coordination information to UE-B by a predetermined method. For example, UE-A may transmit coordination information to UE-B by using the UE-ID of the destination terminal 20 of transport blocks transmitted from UE-B. For example, resources for transmitting information in inter-terminal coordination method (1) or inter-terminal coordination method (2) may be determined based on the UE-ID of the destination terminal 20. The information-transmitting resources may be PSFCH resources, PSCCH resources, or PSSCH resources. Also, when coordination information is transmitted by using SCI, the source ID in the SCI may be made the ID of the destination UE.

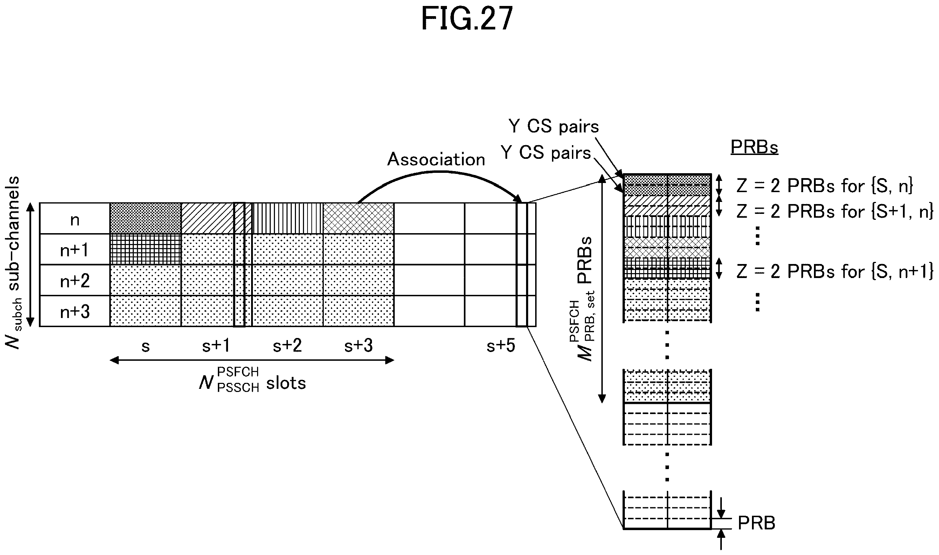

FIG. 27 is a diagram that illustrates an example (1) of resources that are used to transmit coordination information according to an embodiment of the present invention. For example, PSFCH resources to be used to transmit coordination information may be placed as shown in FIG. 27. As shown in FIG. 27, PRBs in which PSFCH associated with PSSCH is placed, and PRBs which are frequency-division-multiplexed may be used as PSFCH resources. In the example shown in FIG. 27, PSFCH associated with the PSSCH in slot s, slot s + 1, slot s + 2, and slot s + 3 is placed in slot s + 5. The PSFCH associated with the PSSCH of slot s and subchannel n is placed in the top two PRBs of the PRBs in which the PSFCH is placed, as shown in FIG. 27, and Y CS (Cyclic Shift) pairs are mapped to each PRB. That is, the number of PRBs, "Z," in a PSFCH resource associated with PSSCH in one slot and one subchannel is two.

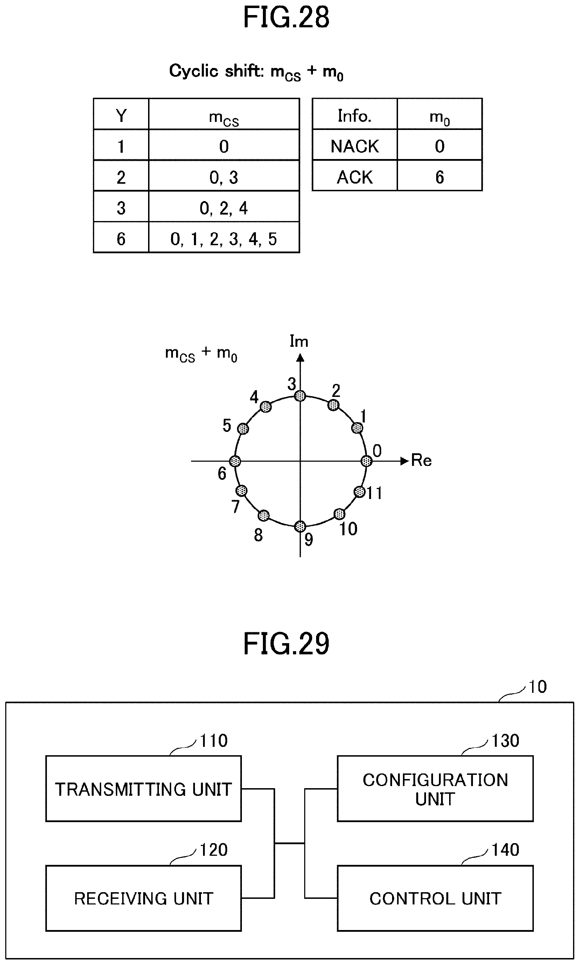

FIG. 28 is a diagram that illustrates an example (2) of resources that are used to transmit coordination information according to an embodiment of the present invention. FIG. 28 is a diagram that illustrates an example (2) of resources that are used for communication according to an embodiment of the present invention. For example, cyclic shift pairs, such as those defined in FIG. 28, may be used as resources for a feedback channel. m_{cs} is {0} when Y = 1, {0, 3} when Y = 2, {0, 2, 4} when Y = 3, and {0, 1, 2, 3, 4, 5} when Y = 4. m₀ is 0 for NACK and 6 for ACK. m_{cs} + m₀ corresponds to one feedback.

The PSFCH resource index may be determined by (P_{ID} + M_{ID}) mod (Z × Y). P_{ID} is the source ID. M_{ID} is 0 in the event of unicast or groupcast option 1, and is the member ID in the event of groupcast option 2. PSFCH resources avoid conflict with other terminals 20 based on P_{ID}.

In the event groupcast option 2 is employed, above P_{ID} may be made the ID of UE-B, and above M_{ID} may be made the ID of the destination terminal 20 to which transport blocks are transmitted from UE-B.

Also, UE-A may transmit coordination information to UE-B by using its own UE-ID. For example, UE-A may determine the resources for transmitting information in inter-terminal coordination method (1) or inter-terminal coordination method (2) according to its own UE-ID. The information-transmitting resources may be PSFCH resources, PSCCH resources, or PSSCH resources.

Also, regarding the information-transmitting resources in above inter-terminal coordination method (1) or inter-terminal coordination method (2), resources for the destination terminal 20 of transport blocks transmitted from UE-B and resources for non-destination terminals 20 may be defined, provided, or designated separately. For example, UE-A may determine the resources for transmitting coordination information based on whether UE-A is the destination terminal 20 of transport blocks transmitted from UE-B.

Also, information as to which terminal 20 the coordination information in inter-terminal coordination method (1) or inter-terminal coordination method (2) is destined may be transmitted to UE-B.

Also, when a certain reservation signal is received from UE-B, the coordination information may be transmitted in corresponding PSFCH resources, as described earlier, and this name is by no means limiting.

For example, the time-domain resources for this PSFCH may be determined based on the reservation signal. That is, the time-domain resources for this PSFCH may be determined by the same method as the method of determining time-domain resources for PSFCH in NR Rel. 16 shown in FIG. 27 and FIG. 28, or may be determined based on other parameters configured.

Also, the time-domain resource for the PSFCH may be determined based on the resources reserved by the reservation signal. For example, the time-domain resources for the PSFCH may be the time-domain resources a predetermined amount of time backward from the reserved resources, and how much time to go backward may be determined based on a parameter. For example, this parameter may be "sl-MinTimGapPSFCH-2." When UE-A detects a resource conflict in PSSCH resources reserved for UE-B, UE-A may go backward, from there, the number of slots designated by the higher layer parameter "sl-MinTimGapPSFCH-2" configured in the resource pool, find the slots in which these PSFCH resources are included, and perform transmission in the first slot among them. Note that this procedure for determining frequency-domain resources for PSFCH may be the same as the procedure for determining frequency-domain resources for PSFCH in NR Rel. 16.

Also, the time-domain resources for the PSFCH may be both resources that are determined based on the reservation signal, and resources that are determined based on the resources reserved by the reservation signal. In this case, the coordination information may be transmitted using both groups of PSFCH resources, or may be transmitted using one group of PSFCH resources. Which group of PSFCH resources is used may be determined by UE-A based on a predetermined method, or may be determined depending on the implementation of UE-A. According to the predetermined method, the determination may be made, for example, based on whether the processing time needed for performing inter-terminal coordination method (1) or inter-terminal coordination method (2) is secured, or, among the PSFCH resources where this processing time is secured, ones that are earlier in time may be selected.

Above proposal 4 will be described in detail below. In proposal 2 above, UE-B performs a predetermined operation based on information received from UE-A. UE-B may always perform following operations (1) to (6) according to inter-terminal coordination method (1) or inter-terminal coordination method (2).
(1) UE-B's resources to be used to select or re-select the resources for transmission may be selected based on both the result of sensing by UE-B and coordination information received from UE-A. Note that this may be applied only when UE-B's sensing results are available. If UE-B holds no sensing result that is available, the above resources may be selected based solely on coordination information received from UE-A.
(2) UE-B's resources to be selected or re-selected for transmission may be selected based solely on coordination information received from UE-A.
(3) UE-B's re-selected resources may be determined based on coordination information received from UE-A.
(4) UE-B's resources that are used to select or re-select the resources for transmission may be selected based on coordination information received from UE-A.
(5) UE-B may determine the re-selected resources based on coordination information received from UE-A.
(6) UE-B may determine whether retransmission is needed or not, based on coordination information received from UE-A.

Also, UE-B may determine whether to perform operations according to inter-terminal coordination method (1) or inter-terminal coordination method (2). For example, UE-B may perform operations according to inter-terminal coordination method (1) or inter-terminal coordination method (2) only when a predetermined condition is satisfied. That is, unless a predetermined condition is satisfied, UE-B need not perform operations according to inter-terminal coordination method (1) or inter-terminal coordination method (2).

The predetermined condition may be that the coordination information with the highest priority value (that is, the most preferable coordination information for use) among multiple items of coordination information received from one or more UE-As be used. That is, UE-B may perform operations according to inter-terminal coordination method (1) or inter-terminal coordination method (2) based on this coordination information with the highest priority value.

The predetermined condition may also be that UE-B has received coordination information and transmitted a transport block to a destination terminal 20, and yet UE-B has not received ACK, or has received NACK, in response to the transport block. UE-B may perform operations according to inter-terminal coordination method (1) or inter-terminal coordination method (2) based on the coordination information received from that terminal 20.

The predetermined condition may also be that re-selection is determined unnecessary based on other information that UE-B holds (for example, information that UE-B has obtained through sensing, coordination information received from a terminal 20 other than the terminal 20 that transmitted the coordination information, etc.). Based on the coordination information, UE-B may perform the operations according to inter-terminal coordination method (1) or inter-terminal coordination method (2).

Also, the operation of UE-B having received coordination information may change based on whether UE-A is the destination terminal 20 of transport blocks transmitted from UE-B. For example, when UE-A is the destination terminal 20 of transport blocks transmitted from UE-B, UE-B may always perform operations according to inter-terminal coordination method (1) or inter-terminal coordination method (2). When UE-A is not the destination terminal 20 of transport blocks transmitted from UE-B, whether UE-B performs operations according to inter-terminal coordination method (1) or inter-terminal coordination method (2) or not may be subject to determination.

Above proposal 5 will be described in detail below. Proposal 1 and proposal 2 described above may be switched and applied based on a predetermined condition.

Which one of proposal 1 and proposal 2 is applied may be switched based on the state of UE-B and/or the destination terminal 20 of transport blocks transmitted from UE-B. For example, this may be switched as in following (1) to (5).
(1) Proposal 2 may be applied when UE-B and the destination UE carry out transmission at the same time.
(2) Proposal 2 may be applied when UE-B transmits a signal for reserving the resource of slot m in slot n, and the destination UE of UE-B is transmitting a signal (for example, an SL signal, a UL signal, etc.) in slot n.
(3) Proposal 2 may be applied when UE-B transmits a signal for reserving the resource of slot m in slot n, and the destination UE of UE-B is transmitting a signal for reserving the resource of slot m in slot n, or proposal 2 may be applied when UE-B transmits a signal for reserving the resource of slot m in slot n, and the destination UE of UE-B is transmitting a signal for reserving the resource of slot m.
(4) Proposal 2 may be applied when both UE-B and the destination UE of UE-B are transmitting signals in slot n.
(5) Proposal 2 may be applied when UE-B transmits a predetermined request to a UE other than the destination UE of UE-B.

Note that proposal 1 may be applied in cases other than at least one of (1) to (5) given above.

Also, which one of proposal 1 and proposal 2 is applied may be switched depending on the number of destination UEs UE-B has. For example, proposal 1 may be applied when the number of destination UEs of UE-B is one, or proposal 2 may be applied when the number of destination UEs of UE-B is two or more. The case where the number of destination UEs of UE-B is two or more may arise when UE-B performs broadcast or groupcast transmission.

Also, which one of proposal 1 and proposal 2 is applied may be switched based on the method of inter-terminal coordination. For example, proposal 2 may be applied when inter-terminal coordination method (1) is employed, or proposal 1 above may be applied when inter-terminal coordination method (2) is employed.

Also, which one of proposal 1 and proposal 2 is applied may be switched based on whether the destination UE of UE-B can execute inter-terminal coordination methods. For example, proposal 2 may be applied when the destination UE of UE-B cannot execute inter-terminal coordination methods (for example, the destination UE is a release 16 UE or a release 17 UE that cannot execute inter-terminal coordination methods). On the other hand, proposal 1 may be applied when the destination UE of UE-B can execute inter-terminal coordination methods (for example, the destination UE is a release 17 UE and can execute inter-terminal coordination methods).

As described above, which one of proposal 1 and proposal 2 is applied may be switched based on a predetermined condition, so that it is possible to use an inter-terminal coordination method that is optimal for the situation.

The above embodiment may be applied to operations in which one terminal 20 configures or allocates transmitting resources for other terminals 20.

The above embodiment is by no means limited to V2X terminals, and may be applied to terminals that perform D2D communication.

The operations according to the above embodiment may be executed only in specific resource pools. For example, the operations according to the above embodiment may be executed only in a resource pool that is available to terminals 20 of release 17 or later versions.

According to the embodiment described above, when a terminal 20 receives information related to inter-terminal coordination from another terminal 20, the first terminal 20 can select or re-select the resources based on that information. Also, when a terminal 20 receives information related to inter-terminal coordination from another terminal 20, the first terminal 20 can determine, based on that information, whether or not to retransmit the transport blocks that the terminal 20 has transmitted.

That is, it is possible to improve the reliability of communication during autonomous resource selection in terminal-to-terminal direct communication.

### (Device structure)

Next, example functional structures of the base station 10 and the terminal 20 that perform the processes and operations described thus far will be described. The base station 10 and the terminal 20 have functions to implement the embodiment described above. However, the base station 10 and the terminal 20 may each have only part of the functions of the embodiment.

### <Base station 10>

FIG. 29 is a diagram that illustrates an example functional structure of the base station 10. As illustrated in FIG. 29, the base station 10 includes a transmitting unit 110, a receiving unit 120, a configuration unit 130, and a control unit 140. The functional structure illustrated in FIG. 29 is only one example. If the operation according to the embodiment of the present invention can be performed, any functional categories and any functional unit names may be used.

The transmitting unit 110 includes a function for generating signals to be transmitted to the terminal 20 side and transmitting the signals wirelessly. The receiving unit 120 includes a function of receiving various signals transmitted from the terminal 20 and acquiring, for example, higher layer information from the received signals. Also, the transmitting unit 110 has a function to transmit NR-PSS, NR-SSS, NR-PBCH, DL/UL control signals, DL reference signals, and so forth, to the terminal 20.

The configuration unit 130 stores configuration information that is pre-configured and various configuration information to be transmitted to the terminal 20, in a storage device, and reads the information from the storage device as needed. The content of the configuration information includes, for example, information related to D2D communication configurations.

The control unit 140 performs processes related to the configurations that allow the terminal 20 to perform D2D communication, as described in the embodiment. Also, the control unit 140 transmits the scheduling of D2D communication and DL communication to the terminal 20 via the transmitting unit 110. Also, the control unit 140 receives information related to HARQ acknowledgment in D2D communication and DL communication from the terminal 20 via the receiving unit 120. Note that a functional unit relating to signal transmission in the control unit 140 may be included in the transmitting unit 110, and a functional unit relating to signal reception in the control unit 140 may be included in the receiving unit 120.

### <Terminal 20>

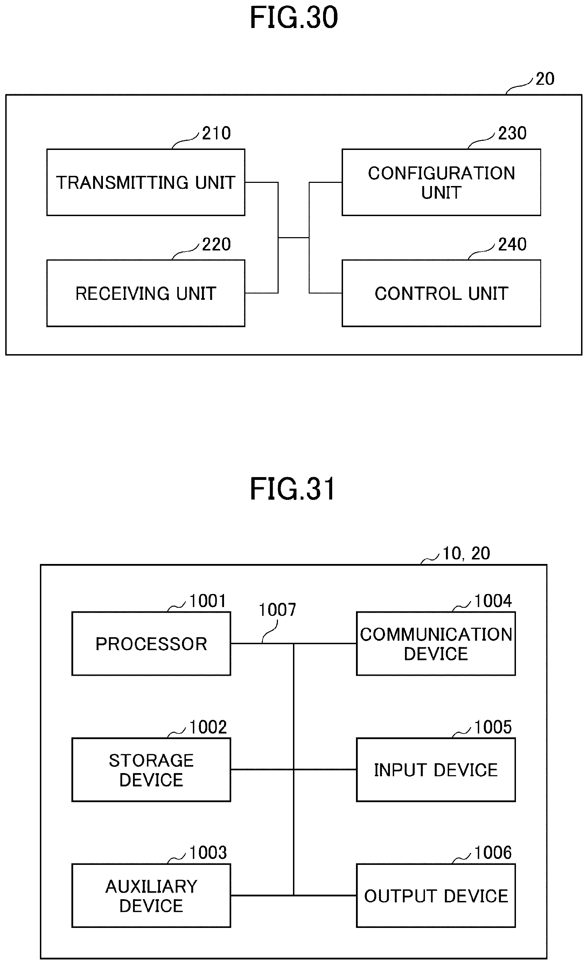

FIG. 30 is a diagram that illustrates an example functional structure of the terminal 20. As illustrated in FIG. 30, the terminal 20 includes a transmitting unit 210, a receiving unit 220, a configuration unit 230, and a control unit 240. The functional structure illustrated in FIG. 30 is only one example. Insofar as the operation according to the embodiment of the present invention can be performed, any functional categories and functional unit names may be used.

The transmitting unit 210 creates transmission signals from the transmission data and transmits the transmission signals wirelessly. The receiving unit 220 receives various signals wirelessly, and acquires signals of higher layers from the received signal of the physical layer. Also, the receiving unit 220 has a function to receive NR-PSS, NR-SSS, NR-PBCH, DL/UL/SL control signals or reference signals transmitted from the base station 10. Also, for example, in D2D communication, the transmitting unit 210 transmits PSCCH (Physical Sidelink Control CHannel), PSSCH (Physical Sidelink Shared CHannel), PSDCH (Physical Sidelink Discovery CHannel), PSBCH (Physical Sidelink Broadcast CHannel), and so forth, to other terminals 20, and the receiving unit 220 receives PSCCH, PSSCH, PSDCH, PSBCH, and so forth from other terminals 20.

The configuration unit 230 stores a variety of configuration information, received from the base station 10 or the terminal 20 through the receiving unit 220, in a storage device, and reads them from the storage device on an as-needed basis. Also, the configuration unit 230 stores configuration information that is pre-configured. The content of the configuration information is, for example, information related to D2D communication configurations.

The control unit 240 controls D2D communication, in which RRC connection is established with other terminals 20, as described in the embodiment. Also, the control unit 240 performs processes related to power-saving operation. Also, the control unit 240 performs processes related to HARQ in D2D communication and DL communication. Also, the control unit 240 transmits, to the base station 10, information related to HARQ acknowledgments to other terminals 20, scheduled by the base station 10, in D2D communication and DL communication. Also, the control unit 240 may schedule D2D communication for other terminals 20. Also, the control unit 240 may autonomously select the resources to use in D2D communication through a resource selection window based on sensing results, or perform re-evaluation or preemption. Also, the control unit 240 performs processes related to power-saving in transmission and reception in D2D communication. Also, the control unit 240 performs processes related to inter-terminal coordination in D2D communication. Note that a functional unit relating to signal transmission in the control unit 240 may be included in the transmitting unit 210, and a functional unit relating to signal reception in the control unit 240 may be included in the receiving unit 220.

### (Hardware structure)

The block diagrams (FIG. 29 and FIG. 30) used in the description of the above embodiment illustrate blocks of functional units. These functional blocks (components) are implemented by any combination of hardware and/or software. In addition, the method of implementing each functional block is not particularly limited. That is, each functional block may be implemented by using a single device that is physically or logically combined, or two or more devices that are physically or logically separated may be directly or indirectly connected (for example, by using a cable, radio, etc.), and each functional block may be implemented using these multiple devices. The functional blocks may be implemented by combining software with the device or devices.

The functions include, but are not limited to, judgment, determination, decision, calculation, computation, processing, derivation, research, search, verification, reception, transmission, output, access, resolution, selection, choosing, establishment, comparison, assumption, expectation, deeming, broadcasting, notifying, communicating, forwarding, configuring, reconfiguring, allocating, mapping, and assigning. For example, a functional block (component) that works a transmission function is referred to as a "transmitting unit" or a "transmitter." In either case, as described above, the method of implementation is not particularly limited.

For example, the base station 10, the terminal 20, and so forth according to the embodiment of the present disclosure may function as a computer for processing the wireless communication method of the present disclosure. FIG. 31 is a diagram that illustrates an example hardware structure of the base station 10 and the terminal 20 according to an embodiment of the present disclosure. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be read as circuit, apparatus, unit, and so forth. The hardware structure of the base station 10 and the terminal 20 may be configured to include one or more of the devices illustrated in the drawings, or may be configured without some of the devices.

The functions of the base station 10 and the terminal 20 are realized by performing operations by the processor 1001 by reading predetermined software (programs) on hardware such as the processor 1001 and the storage device 1002, and controlling communication by the communication device 1004 and controlling at least one of reading and writing of data in the storage device 1002 and the auxiliary storage device 1003.

The processor 1001 operates, for example, an operating system to control the entire computer. The processor 1001 may be composed of a central processing unit (CPU) including an interface with peripheral devices, a control device, an arithmetic device, a register, and the like. For example, the above-described control unit 140, control unit 240, and the like may be implemented by the processor 1001.

The processor 1001 reads out programs (program codes), software modules, data, or the like from at least one of the auxiliary storage device 1003 and the communication device 1004 to the storage device 1002, and performs various processes in accordance with the above. As for the programs, programs that cause the computer to execute at least part of the operation described in the above embodiment may be used. For example, the control unit 140 of the base station 10 illustrated in FIG. 29 may be stored in the storage device 1002 and implemented by control programs operating in the processor 1001. For example, the control unit 240 of the terminal 20 illustrated in FIG. 30 may be stored in the storage device 1002 and implemented by control programs operating in the processor 1001. Although the foregoing processes have been described and executed by one processor 1001, they may be executed simultaneously or sequentially by two or more processors 1001. The processor 1001 may be implemented by one or more chips. Note that the programs may be transmitted from the network via a telecommunication line.

The storage device 1002 is a computer-readable recording medium and may be composed of at least one of, for example, a read-only memory (ROM), an erasable programmable ROM (EPROM), an electrically erasable programmable ROM (EEPROM), a random access memory (RAM), and the like. The storage device 1002 may be referred to as a register, cache, main memory (main storage device), or the like. The storage device 1002 can store programs (program codes), software modules, and so forth, executable to implement the communication method according to the embodiment of the present disclosure.

The auxiliary storage device 1003 is a computer-readable recording medium and may be composed of at least one of an optical disk, such as a compact disc ROM (CD-ROM), a hard disk drive, a flexible disk, a magneto-optical disk (for example, a compact disc, a digital versatile disc, a Blu-ray disc (registered trademark), etc.), a smart card, a flash memory (for example, a card, a stick, a key drive), a floppy disk (registered trademark), a magnetic strip, and the like. The storage medium described above may be, for example, a database, a server, or other suitable medium that includes at least one of a storage device 1002 and an auxiliary storage device 1003.

The communication device 1004 is hardware (a transceiving device) for performing communication between computers via at least one of a wired network and a wireless network, and is also referred to as a "network device," a "network controller," a "network" card, a "communication module," or the like. The communication device 1004 may be composed of a high frequency switch, a duplexer, a filter, a frequency synthesizer, or the like, for example, to implement at least one of frequency division duplex (FDD) and time division duplex (TDD). For example, the transmitting/receiving antenna, the amplifier unit, the transceiving unit, the transmission line interface, and the like may be implemented by the communication device 1004. The transceiving unit may be physically or logically isolated, respective implementations of a transmitting unit and a receiving unit.

The input device 1005 is an input device (for example, a keyboard, a mouse, a microphone, a switch, a button, a sensor, etc.) that accepts external input. The output device 1006 is an output device (for example, a display, a speaker, an LED lamp, etc.) that implements external output. The input device 1005 and the output device 1006 may have an integral structure (for example, a touch panel).

Each device, such as the processor 1001 and the storage device 1002, is connected by a bus 1007 for communicating information. The bus 1007 may be constructed using a single bus or may be constructed using different buses between devices.

The base station 10 and the terminal 20 may also include hardware such as a microprocessor, a digital signal processor (DSP), an application-specific integrated circuit (ASIC), a programmable logic device (PLD), a field programmable gate array (FPGA), and so forth, and some or all of the functional blocks may be implemented by the hardware. For example, the processor 1001 may be implemented using at least one of these hardware components.

### (Summary of embodiment)

As described above, according to the embodiment of the present invention, a terminal is provided. This terminal includes: a receiving unit configured to receive signals from a first terminal and a second terminal in a resource pool; a control unit configured to detect an overlap of a resource reserved based on a signal received from the first terminal and a resource reserved based on a signal received from the second terminal, and determine to which one of the first terminal and the second terminal information related to resources is transmitted; and a transmitting unit configured to transmit the information related to resources to the determined terminal.

According to the above configuration, when the terminal 20 receives information related to inter-terminal coordination from another terminal 20, the terminal 20 can select or re-select the resources based on that information. Also, when the terminal 20 receives information related to inter-terminal coordination from another terminal 20, the terminal 20 can determine, based on this information, whether or not to retransmit the transport blocks that the terminal 20 has transmitted. That is, the reliability of communication during autonomous resource selection can be improved in terminal-to-terminal direct communication.

When the signal received from the first terminal is not addressed to the terminal and the signal received from the second terminal is addressed to the terminal, the control unit may determine to transmit the information related to resources to the first terminal. According to this configuration, when the terminal 20 receives information related to inter-terminal coordination from another terminal 20, the terminal 20 can select or re-select the resources based on that information. Also, when the terminal 20 receives information related to inter-terminal coordination from another terminal 20, the terminal 20 can determine, based on this information, whether or not to retransmit the transport blocks that the terminal 20 has transmitted.

When the priority value of the signal received from the first terminal is lower than the priority value of the signal received from the second terminal, the control unit may determine to transmit the information related to resources to the first terminal. According to this configuration, when the terminal 20 receives information related to inter-terminal coordination 20 from another terminal, the terminal 20 can select or re-select the resources based on that information. Also, when the terminal 20 receives information related to inter-terminal coordination from another terminal 20, the terminal 20 can determine, based on this information, whether or not to retransmit the transport blocks that the terminal 20 has transmitted.

When the receiving power of the signal received from the first terminal is greater than a threshold, the control unit may determine to transmit the information related to resources to the first terminal. According to this configuration, when the terminal 20 receives information related to inter-terminal coordination 20 from another terminal, the terminal 20 can select or re-select the resources based on that information. Also, when the terminal 20 receives information related to inter-terminal coordination from another terminal 20, the terminal 20 can determine, based on this information, whether or not to retransmit the transport blocks that the terminal 20 has transmitted.

When decoding of the signal received from the second terminal fails, the control unit may determine to transmit the information related to resources to the first terminal. According to this configuration, when the terminal 20 receives information related to inter-terminal coordination from another terminal 20, the terminal 20 can select or re-select the resources based on that information. Also, when the terminal 20 receives information related to inter-terminal coordination from another terminal 20, the terminal 20 can determine, based on this information, whether or not to retransmit the transport blocks that the terminal 20 has transmitted.

Also, according to the embodiment of the present invention, a communication method to be executed by a terminal is provided. This method includes: receiving signals from a first terminal and a second terminal in a resource pool; detecting an overlap of a resource reserved based on a signal received from the first terminal and a resource reserved based on a signal received from the second terminal, and determining to which one of the first terminal and the second terminal information related to resources is transmitted; and transmitting the information related to resources to the determined terminal.

According to the above configuration, when the terminal 20 receives information related to inter-terminal coordination from another terminal 20, the terminal 20 can select or re-select the resources based on that information. Also, when the terminal 20 receives information related to inter-terminal coordination from another terminal 20, the terminal 20 can determine, based on this information, whether or not to retransmit the transport blocks that the terminal 20 has transmitted. That is, the reliability of communication during autonomous resource selection can be improved in terminal-to-terminal direct communication.

### (Notes on embodiment)

An example embodiment of the present invention has been described above, but the disclosed invention is not limited to the above embodiment, and those skilled in the art would understand that there may be various modified examples, revised examples, alternative examples, substitution examples, and the like. In order to facilitate understanding of the invention, specific numerical values have been used for description, but the numerical values are merely examples, and any suitable values may be used unless otherwise specified. The classification of items in the above description is not essential to the present invention. Matters described as two or more items may be combined if necessary, and a matter described as one item may be applied to another item (as long as there is no contradiction). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiment, the order of the processes may be changed as long as there is no contradiction. For the sake of convenience of processing description, the base station 10 and the terminal 20 are described using functional block diagrams, but such devices may be implemented by hardware, software, or a combination thereof. Software executed by the processor included in the base station 10 according to the embodiment of the present invention and software executed by the processor included in the terminal 20 according to the embodiment of the present invention may be stored in a random access memory (RAM), a flash memory, a read-only memory (ROM), an EPROM, an EEPROM, a register, an hard disk drive (HDD), a removable disk, a CD-ROM, a database, a server, or any other appropriate storage medium.

Furthermore, notification of information is not limited to the aspect or embodiment described in the present disclosure, and may be provided by using any other method. For example, the notification of information may be provided by physical layer signaling (for example, downlink control information (DCI) or uplink control information (UCI)), higher layer signaling (for example, radio resource control (RRC) signaling, medium access control (MAC) signaling, broadcast information (master information block (MIB), system information block (SIB), etc.), other signals, or a combination thereof. Furthermore, RRC signaling may be referred to as an "RRC message" and may be, for example, an RRC connection setup message, an RRC connection reconfiguration message, or the like.

Each aspect and embodiment described in the present disclosure may be applied to at least one of long-term evolution (LTE), LTE-advanced (LTE-A), SUPER 3G, IMT-Advanced, 4th generation mobile communication system (4G), 5th generation mobile communication system (5G), future radio access (FRA), new radio (NR), W-CDMA (registered trademark), GSM (registered trademark), CDMA 2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and next generation systems enhanced based on these standards. Furthermore, a plurality of systems (for example, a combination of at least one of LTE and LTE-A with 5G) may be combined to be applied.

The order of the processing procedures, the order of the sequences, the order of the flowcharts, and the like of the respective aspects/embodiments described in this specification may be changed, provided that there is no contradiction. For example, the method described in the present disclosure presents elements of various steps with an example order and is not limited to the presented, specific order.

In this specification, a specific operation to be performed by the base station 10 may be performed by an upper node in some cases. In the network including one or more network nodes including the base station 10, various operations performed for communication with the terminal 20 can be obviously performed by at least one of the base station 10 and any network node (for example, an MME, an S-GW, or the like is considered, but it is not limited thereto) other than the base station 10. A case has been shown above in which there is one network node other than the base station 10. The one network node may be a combination of a plurality of other network nodes (for example, MME and S-GW).

Information, a signal, or the like described in the present disclosure may be output from a higher layer (or from a lower layer) to a lower layer (or to a higher layer). Information, a signal, or the like described in the present disclosure may be input and output via a plurality of network nodes.

Input and output information and the like may be stored in a specific place (for example, a memory), or may be managed by using a management table. Input and output information and the like may be overwritten, updated, or additionally written. Output information and the like may be deleted. Input information and the like may be transmitted to other devices.

The determination in the present disclosure may be made in accordance with a value (0 or 1) represented by one bit, may be made in accordance with a Boolean value (Boolean: true or false), or may be made by a comparison of numerical values (for example, a comparison with a predetermined value).

Software should be broadly interpreted to mean a command, a command set, a code, a code segment, a program code, a program, a subprogram, a software module, an application, a software application, a software package, a routine, a subroutine, an object, an executable file, an execution thread, a procedure, a function, and the like, regardless of whether software is called "software," "firmware," "middleware," a "microcode," a "hardware description language," or any other name.

Furthermore, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL)) and a radio technology (such as infrared rays or a microwave), at least one of these wired technology and radio technology is included in a definition of a transmission medium.

Information, signals, and the like described in the present disclosure may be expressed using any one of a variety of different techniques. For example, data, instructions, commands, information, signals, bits, symbols, chips, and the like, which are mentioned throughout the above description, may be expressed by voltages, currents, electromagnetic waves, magnetic fields or magnetic particles, optical fields or photons, or any combination thereof.

The terms described in the present disclosure and the terms necessary for understanding the present disclosure may be replaced with terms having the same or similar meanings. For example, at least one of a channel and a symbol may be a signal (signaling). Furthermore, a signal may be a message. Furthermore, a component carrier (CC) may be referred to as a "carrier frequency," a "cell," a "frequency carrier," or the like.

The terms "system" and "network" used in the present disclosure are interchangeable.

Furthermore, the information, parameters, and the like described in the present disclosure may be expressed by using absolute values, may be expressed by using relative values from predetermined values, or may be expressed by using any other corresponding information. For example, the radio resources may be those indicated by indices.

The names used for the above-described parameters are not limited names in any point of view. Furthermore, mathematical formulas or the like using the parameters may be different from those explicitly disclosed in the present disclosure. Since various channels (for example, PUCCH, PDCCH, etc.) and information elements can be identified by any suitable names, various names assigned to the various channels and the information elements are not limited names in any point of view.

In the present disclosure, the terms "base station (BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to by a term such as a "macrocell," a "small cell," a "femtocell," and a "picocell."

The base station can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (RRH: Remote Radio Head)). The term "cell" or "sector" refers to the whole or a part of the coverage area of at least one of the base station and the base station subsystem that performs a communication service in the coverage.

In the present disclosure, the terms "mobile station (MS)," "user terminal," "user equipment (UE)," "terminal," and the like can be used interchangeably.

The mobile station may be referred to, by a person ordinarily skilled in the art, as a "subscriber station," a "mobile unit," a "subscriber unit," a "wireless unit," a "remote unit," a "mobile device," a "wireless device," a "wireless communication device," a "remote device," a "mobile subscriber station," an "access terminal," a "mobile terminal," a "wireless terminal," a "remote terminal," a "handset," a "user agent," a "mobile client," a "client," or some other suitable terms.

At least one of the base station and the mobile station may be also referred to as a "transmission device," a "receiving device," a "communication device," or the like. At least one of the base station and the mobile station may be a device installed in a mobile body, a mobile body itself, or the like. The mobile body may be a vehicle (for example, a car, an airplane, etc.), an unmanned body that moves (for example, a drone, an autonomous car or the like), or a robot (manned type or unmanned type). At least one of the base station and the mobile station includes a device that need not move during communication operation. For example, at least one of the base station and the mobile station may be an Internet of Things (IoT) device such as a sensor.

Furthermore, the base station in the present disclosure may be replaced by the user terminal. For example, various aspects/embodiments of the present disclosure may be applied to a configuration in which communication between the base station and the user terminal is replaced by communication between multiple terminals 20 (such communication may be referred to as "device-to-device (D2D)," "vehicle-to-everything (V2X)," etc.). In this case, the terminals 20 may have and perform the functions the base station 10 described above has. The phrases "uplink" and "downlink" may also be replaced by phrases corresponding to terminal-to-terminal communication (for example, "side"). For example, an uplink channel, a downlink channel, or the like may be replaced by a side channel.

Similarly, the user terminal in the present disclosure may be replaced with the base station. In this case, the base station may have the functions of the above-described user terminal.

The terms "determination (determining)" and "decision (determining)" used in the present specification may include various types of operations. The "determination" and "decision" may include deeming "judging," "calculating," "computing," "processing," "deriving," "investigating," "looking up (for example, searching in a table, a database, or another data structure)," "searching," "inquiring," or "ascertaining" as "determining" and/or "deciding." Furthermore, the "determination" and "decision" may include deeming "receiving (for example, receiving information)," "transmitting (for example, transmitting information)," "inputting," "outputting," or "accessing (for example, accessing data in a memory)" as "determining" and/or "deciding." Furthermore, the "determination" and "decision" may include deeming "resolving," "selecting," "choosing," "establishing," or "comparing" as "determining" and/or "deciding." Namely, the "determination" and "decision" may include deeming an operation as "determining" and/or "deciding." Furthermore, "determining" may be replaced with "assuming," "expecting," "considering," or the like.

The terms "connected," "coupled," or variations thereof may mean any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In a case of using in the present disclosure, two elements may be considered to be "connected" or "coupled" with each other using at least one of one or more electric wires, cables and/or a printed electrical connection or using electromagnetic energy having a wavelength in a radio frequency region, a microwave region, or a light (both visible and nonvisible) region as non-limiting and non-exhaustive examples.

A reference signal may be abbreviated as "RS" and may be referred to as a "pilot," depending on the standard that is applied.

The phrase "based on" used in the present disclosure does not only mean "based only on," unless otherwise stated. In other words, the phrase "based on" means both "based only on" and "based at least on."

Any reference to an element using a designation such as "first" or "second," used in the present disclosure, does not generally restrict quantities or the order of those elements. Such designation can be used in the present disclosure as a convenient method of distinguishing between two or more elements. Thus, reference to the first and second elements does not mean that only two elements can be adopted there, or the first element must precede the second element in a certain way.

Furthermore, "means" in the structure of each of the above devices may be replaced with "unit," "circuit," "device," or the like.

When "include," "including," and variations thereof are used in the present disclosure, these terms are intended to be comprehensive, similar to the term "provided with (comprising)." Furthermore, the term "or" used in the present disclosure is intended not to be an exclusive OR.

A radio frame may include one or more frames in the time domain. In the time domain, each of one or more frames may be referred to as a "subframe." The subframe may further include one or more slots in the time domain. The subframe may have a fixed time length (for example, 1 ms) not depending on numerology.

Numerology may be a communication parameter applied to at least one of transmission and reception of a certain signal or channel. For example, numerology may indicate at least one of subcarrier spacing (SCS), the bandwidth, the symbol length, the cyclic prefix length, the transmission time interval (TTI), the number of symbols per TTI, the radio frame structure, a specific filtering process performed in the frequency domain by a transceiver, a specific windowing process performed in the time domain by a transceiver, and the like.

A slot may include one or more symbols (orthogonal frequency division multiplexing (OFDM) symbols, single carrier frequency division multiple access (SC-FDMA) symbols, etc.) in the time domain. A slot may be a time unit based on numerology.

A slot may include a plurality of mini slots. Each mini slot may include one or more symbols in the time domain. Furthermore, a mini slot may be referred to as a "sub-slot." A mini slot may include fewer symbols than a slot. PDSCH (or PUSCH) that is transmitted in a unit of time greater than a mini slot may be referred to as "PDSCH (or PUSCH) mapping type A." PDSCH (or PUSCH) that is transmitted using a mini slot may be referred to as "PDSCH (or PUSCH) mapping type B."

Any one of a radio frame, a subframe, a slot, a mini slot, and a symbol indicates a time unit for transmitting a signal. As a radio frame, a subframe, a slot, a mini slot, and a symbol, different names corresponding to them may be used.

For example, one subframe may be referred to as a "transmission time interval (TTI)," or a plurality of consecutive subframes may be referred to as a "TTI," or one slot or one mini slot may be referred to as a "TTI." In other words, at least one of the subframe and the TTI may be a subframe (1 ms) in conventional LTE, may be a period shorter than 1 ms (for example, 1 to 13 symbols), or may be a period longer than 1 ms. A unit representing the TTI may be referred to as a "slot," a "mini slot," or the like, instead of a "subframe."

Here, for example, the TTI refers to a minimum time unit of scheduling in wireless communication. For example, in an LTE system, the base station performs scheduling of allocating radio resources (frequency bandwidth, transmission power, or the like which can be used in each terminal 20) to each terminal 20 in units of TTIs. The definition of the TTI is not limited thereto.

The TTI may be a transmission time unit such as a channel-coded data packet (transport block), a code block, or a codeword, or may be a processing unit of, for example, scheduling or link adaptation. Furthermore, when a TTI is provided, the time interval (for example, the number of symbols) in which a transport block, a code block, a codeword, or the like is actually mapped may be shorter than the TTI.

When one slot or one mini slot is referred to as a "TTI," one or more TTIs (that is, one or more slots or one or more mini slots) may be a minimum time unit of scheduling. Furthermore, the number of slots (the number of mini slots) forming the minimum time unit of scheduling may be controlled.

A TTI having a time length of 1 ms may be referred to as a "common TTI" (TTI in LTE Rel. 8 to 12), a "normal TTI," a "long TTI," a "common subframe," a "normal subframe," a "long subframe," a "slot," or the like. A TTI shorter than a common TTI may be referred to as a "reduced TTI," a "short TTI," a "partial TTI" (a partial or fractional TTI), a "reduced subframe," a "short subframe," a "mini slot," a "sub slot," a "slot," or the like.

Furthermore, a long TTI (for example, a normal TTI, a subframe, etc.) may be replaced with a TTI having a time length exceeding 1 ms, and a short TTI (for example, a reduced TTI or the like) may be replaced with a TTI having a TTI length that is shorter than a TTI length of a long TTI and that is longer than or equal to 1 ms.

The resource block (RB) is a resource allocation unit in the time domain and the frequency domain, and may include one or more consecutive subcarriers in the frequency domain. The number of subcarriers included in an RB may be the same, irrespective of the numerology and may be, for example, 12. The number of subcarriers included in an RB may be determined based on numerology.

Furthermore, the time range of an RB may include one or more symbols and may have a length of one slot, one mini slot, one subframe, or one TTI. One TTI, one subframe, or the like may be formed with one or more resource blocks.

Furthermore, one or more RBs may be referred to as a "physical resource block (PRB)," a "subcarrier group (SCG)," a "resource element group (REG)," a "PRB pair," an "RB pair," or the like.

Furthermore, a resource block may be formed with one or more resource elements (REs). For example, one RE may be a radio resource field of one subcarrier and one symbol.

A bandwidth part (BWP) (which may be referred to as a "partial bandwidth" or the like) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include BWP for UL (UL BWP) and BWP for DL (DL BWP). In the terminal 20, one or more BWPs may be configured in one carrier.

At least one of configured BWPs may be active, and the terminal 20 need not assume that predetermined signals/channels are transmitted and received outside an active BWP. Furthermore, a "cell," a "carrier," or the like in the present disclosure may be replaced with a "BWP."

Structures of the radio frame, the subframe, slot, the mini slot, and the symbol are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the cyclic prefix (CP) length, and the like can be variously changed.

In the present disclosure, for example, when an article such as "a," "an," or "the" in English is added by a translation, the present disclosure may include a case in which a noun following the article is the plural.

In the present disclosure, "A and B are different" may mean "A and B are different from each other." However, this may also mean "A and B are different from C." Terms such as "separated" or "combined" may be interpreted as well as "different."

Each aspect/embodiment described in the present disclosure may be used alone, in combination, or may be switched in accordance with the implementation. Furthermore, notification of predetermined information (for example, notification of "being X") is not limited to notification performed explicitly, but may be performed implicitly (for example, not notifying the predetermined information).

Note that, in the present disclosure, the interterminal coordination information is an example of information that relates to resource selection.

Although the present disclosure has been described above in detail, it is obvious to those skilled in the art that the present disclosure is not limited to the embodiment described in the present disclosure. The present disclosure may be implemented as revised and modified embodiments without departing from the gist and scope of the present disclosure as set forth in the accompanying claims. Accordingly, the description of the present disclosure is for the purpose of illustration and does not have any restrictive meaning to the present disclosure.

### [DESCRIPTION OF THE REFERENCE NUMERALS]

- 10: base station
- 110: transmitting unit
- 120: receiving unit
- 130: configuration unit
- 140: control unit
- 20: terminal
- 210: transmitting unit
- 220: receiving unit
- 230: configuration unit
- 240: control unit
- 1001: processor
- 1002: storage device
- 1003: auxiliary storage device
- 1004: communication device
- 1005: input device
- 1006: output device

## Claims

1. A terminal comprising:
a receiving unit configured to receive signals from a first terminal and a second terminal in a resource pool;
a control unit configured to detect an overlap of a resource reserved based on a signal received from the first terminal and a resource reserved based on a signal received from the second terminal, and determine to which one of the first terminal and the second terminal information related to resources is transmitted; and
a transmitting unit configured to transmit the information related to resources to the determined terminal.

2. The terminal according to claim 1, wherein, when the signal received from the first terminal is not addressed to the terminal and the signal received from the second terminal is addressed to the terminal, the control unit determines to transmit the information related to resources to the first terminal.

3. The terminal according to claim 1, wherein, when a priority value of the signal received from the first terminal is lower than a priority value of the signal received from the second terminal, the control unit determines to transmit the information related to resources to the first terminal.

4. The terminal according to claim 1, wherein, when receiving power of the signal received from the first terminal is greater than a threshold, the control unit determines to transmit the information related to resources to the first terminal.

5. The terminal according to claim 2, wherein, when decoding of the signal received from the second terminal fails, the control unit determines to transmit the information related to resources to the first terminal.

6. A communication method to be executed by a terminal, the method comprising:
receiving signals from a first terminal and a second terminal in a resource pool;
detecting an overlap of a resource reserved based on a signal received from the first terminal and a resource reserved based on a signal received from the second terminal, and determining to which one of the first terminal and the second terminal information related to resources is transmitted; and
transmitting the information related to resources to the determined terminal.
